# EUROPEAN PATENT APPLICATION

(11) **EP 4 836 178 A1**
(43) Date of publication of application: **04.11.2026**
(21) Application number: 26173960.1
(22) Date of filing: 22.04.2026
(51) Int. Cl.: H01M 50/553, H01M 50/55, H01M 50/147, H01M 50/176, H01M 50/184, H01M 50/186, H01M 50/188, H01M 50/538

(54) **SECONDARY BATTERY**

(30) Priority: 22.04.2025 KR 20250052609; 20.04.2026 KR 20260070527
(71) Applicant: LG Energy Solution, Ltd., Seoul 07335 (KR)
(72) Inventor: LEE, Hyun Hee, 34122 Daejeon (KR); PARK, Sang Joon, 34122 Daejeon (KR); SON, Young Jong, 34122 Daejeon (KR); NOH, Seung Hyun, 34122 Daejeon (KR); SUH, Hyun Jung, 34122 Daejeon (KR)
(74) Representative: Goddar, Heinz J.

(57) **Abstract**

Disclosed herein is a secondary battery an electrode assembly comprising electrode tabs protruding outward, a current collector to which at least one of the electrode tabs is connected, a battery casing accommodating the electrode assembly, and a cap assembly coupled to the battery casing such that the current collector is arranged between the electrode assembly and the cap assembly. The cap assembly comprises a base plate having a first surface facing away from the electrode assembly and a second surface opposite the first surface, wherein the base plate comprises, on the first surface thereof, a structure element that is defined by a change in thickness of the base plate, a gasket arranged on the first surface of the base plate and engages the structure element on the first surface of the base plate; and a terminal arranged on the gasket.

## Description

### CROSS-REFERENCE TO RELATED APPLICATION

The present application claims priority to and the benefit of Korean Patent Application No. 10-2025-0052609 filed on April 22, 2025, and Korean Patent Application No. 10-2026-0070527 filed on April 20, 2026.

### BACKGROUND

### TECHNICAL FIELD

The present disclosure relates to a secondary battery.

### RELATED ART

Recently, as demand for portable electronic products has rapidly increased and the development of electric vehicles, energy storage batteries, robots, satellites, and the like has become more active, research has been actively conducted on a high-performance secondary battery capable of repeated charging and discharging.

Secondary batteries may be classified, according to the shape of a battery casing, into a can-type secondary battery in which an electrode assembly is embedded in a metal can, and a pouch-type secondary battery in which an electrode assembly is embedded in a pouch formed of an aluminum laminate sheet. The can-type secondary battery may also be classified into a cylindrical secondary battery and a prismatic secondary battery according to the shape of the metal can.

In a secondary battery, an electrode tab of the electrode assembly may be electrically connected to a current collector, for example by welding. In welding the electrode tab to the current collector, the electrode tab may be bent in a bending direction to increase a contact area between the electrode tab and the current collector, the current collector is seated on an upper side of the electrode tab, and welding may be then performed. This may apply generally to a secondary battery without being limited to the background art.

However, the conventional configuration may cause damage to a separator during welding of the current collector and the electrode tab disposed thereunder. In addition, as the capacity of the secondary battery increases, the number of electrode tabs to be welded simultaneously may increase, Accordingly, the electrode tabs to be welded may be located farther away from the current collector, thereby increasing the difficulty and complexity for the welding altogether.

In view of the prior art, a technical problem to be solved may be configuring a secondary battery so as to prevent damage to its electrode assembly during the manufacturing process, particularly during welding of the electrode tabs to a current collector. Another technical problem to be solved may be enabling welding of a large number of electrode tabs to a current collector in a mechanically stable (reliable) manner. A further technical problem to be solved may be preventing rotation, misalignment or displacement of components of a secondary battery. Another technical problem to be solved may be simplifying the manufacturing of a secondary battery, in particular with regard to a cap assembly of the secondary battery.

### SUMMARY

The present invention is defined according to the subject matter of the appended independent claim(s). Particular embodiments are given by the additional features of the appended dependent claims.

According to an aspect, a secondary battery comprises any one, some or all of the following: an electrode assembly, a current collector, a battery casing and a cap assembly. The electrode assembly may comprise electrode tabs that protrude outward. At least one of the electrode tabs may be connected to the current collector. The battery casing may accommodate the electrode assembly. The cap assembly may be coupled to the battery casing such that the current collector is arranged between the electrode assembly and the cap assembly. The cap assembly may comprise any one, some or all of the following: a base plate, a gasket and a terminal. The base plate may have a first surface facing away from the electrode assembly and a second surface opposite the first surface. The base plate may comprise, on the first surface thereof, a structure element that is defined by a change in thickness of the base plate. The gasket may be arranged on the first surface of the base plate and engages the structure element on the first surface of the base plate. The terminal may be arranged on the gasket.

The technical effect achieved by the subject matter as claimed may be preventing damage to the electrode assembly of a secondary battery during the manufacturing process, particularly during welding of the electrode tabs to a current collector. Alternatively or additionally, a technical effect achieved by the subject matter as claimed may be enabling welding of a large number of electrode tabs to a current collector in a mechanically stable (reliable) manner. Alternatively or additionally, a technical effect achieved by the subject matter as claimed may be preventing rotation, misalignment or displacement of components of a secondary battery. Alternatively or additionally, a technical effect achieved by the subject matter as claimed may be simplifying the manufacturing of a secondary battery, in particular with regards to a cap assembly of the secondary battery.

The secondary battery as used herein may refer to a battery cell, a subunit of a battery cell or any other suitable unit for organizing one or more battery cells. The secondary battery may refer to any one of a pouch-type battery, a cylindrical battery and a prismatic battery, or any other suitable type of battery. While specific examples are described below with reference to drawings that show prismatic battery cells, the present invention is not limited thereto. The secondary battery may comprise any one, some or all of the features of the secondary battery as disclosed herein, including the description below with respect to the drawings, unless indicated otherwise or technically inappropriate.

The electrode assembly may comprise electrode tabs that protrude outward. The electrode assembly may comprise a stack of one or more layers of positive electrode, one or more layers of negative electrode, and one or more layers of separator. Each layer of separator may be interposed between a layer of positive negative electrode and an adjacent layer of negative electrode. The electrode assembly may be dimensioned and shaped so as to fit into an accommodation space of the given battery cell, e.g., into (an accommodation portion of) a pouch of a pouch-type battery cell, into a cylindrical casing (e.g., case or can) of a cylindrical battery cell, or into a prismatic casing (e.g., case or can) of a prismatic battery cell. The electrode assembly may comprise one positive electrode or a plurality of positive electrodes. The electrode assembly may comprise one negative electrode or a plurality of negative electrodes. The electrode assembly may comprise any one, some or all of the features of the electrode assembly as disclosed herein, including the description below with respect to the drawings, unless indicated otherwise or technically inappropriate.

While reference is made to the secondary battery comprising "an" electrode assembly, i.e., a single electrode assembly, the secondary battery may comprise more than a single electrode assembly. For example, the secondary battery may comprise two, three, four or more electrode assemblies each having any one, some or all of the features of the electrode assembly as disclosed herein.

The electrode assembly may be provided by laying said layers upon one another in a specific order (for example, a first layer of separator, a layer of negative electrode, a second layer of separator and a layer of positive electrode) and winding said layers altogether around a winding axis (in a winding direction). Accordingly, the electrode assembly may have a spiral-like structure, which approximates a cylindrical symmetry. The electrode assembly may comprise one or more such wound rolls of positive and negative electrodes and separator(s). In a wound structure, a thickness or a thickness direction of the electrode assembly may be determined in a radial direction with respect to a cylindrical symmetry where the winding axis forms the axial direction.

Alternatively or additionally, the electrode assembly may be provided by laying the aforementioned layers upon one another in a specific order (for example, a first layer of separator, a layer of negative electrode, a second layer of separator and a layer of positive electrode in said order or a variation thereof) and winding said layers altogether around either two winding axes (cores) that are spaced apart from each other, or around a plate-shaped core. Accordingly, the electrode assembly may have a structure of an oblate wound roll. The electrode assembly may comprise one or more such wound rolls of positive and negative electrodes and separator(s). In a wound structure, a thickness or a thickness direction of the electrode assembly may be determined in a direction that is perpendicular to a plane that spans between the two winding axes, or perpendicular to a major surface of the plate-shaped core.

Alternatively or additionally, the electrode assembly may be provided by laying multiple layers of negative electrode, multiple layers of positive electrode and multiple layers of separator upon one another in a specific order (e.g., repeatedly stacking a layer of separator, a layer of negative electrode and a layer of positive electrode in this order upon one another) up to a required thickness (in a stacking direction) of the electrode assembly. Optionally, the electrode assembly may comprise a continuous layer of separator, and one or more layers of positive electrode and one or more layers of negative layers may be laid at respective positions (on respective sides) onto the continuous layer of separator, which is folded, for example in a meandering manner (which may be referred to as z-folding), so as to form a stack with the positive and negative electrodes arranged therein. The electrode assembly may comprise one or more stacks of positive and negative electrodes and separator(s). In a stacked structure, a thickness of the electrode assembly may be determined in a stacking direction of the electrodes and separator(s).

Herein, the term major surface may be used to indicate a surface having a larger areal extent than other surfaces of the same component, such as the current collector. The major surface may be used to refer a surface defining a predominant areal extent of a component, such as the current collector. Specifically, the major surface may indicate herein one of opposite surfaces defining the predominant areal extent of a component, such as the current collector.

The electrode assembly may comprise a plurality of sets of electrodes and separator(s). Each set may be referred to as a mono-cell or a bi-cell according to the denotation convention. The electrodes and separator(s) of each of the sets may be either stacked in a predetermined manner as described above and known in the art, or laid upon one another in a specific order and wound to form a wound roll as described above and known in the art. The sets of electrodes and separator(s) may be collectively referred to as electrode assembly. Each of the sets of electrodes and separator(s) may be provided with electrode tabs for each polarity. In some examples, each of the sets of electrodes and separator(s) may be referred to as an electrode portion.

Herein, an electrode portion may refer to a portion of the electrode assembly including a plurality of electrodes, electrode members (and/or electrode elements) of both polarities and separators interposed therebetween. The electrode may be formed as a stacked structure of a plurality of electrodes, electrode members (and/or electrode elements) of both polarities and separators interposed therebetween. Alternatively, the electrode may be formed as a wound structure of a plurality of electrodes, electrode members (and/or electrode elements) of both polarities and separators interposed therebetween. The electrode portion may comprise any one, some or all of the features of the electrode portion as disclosed herein, including the description below with respect to the drawings, unless indicated otherwise or technically inappropriate.

The electrode assembly may comprise electrode tabs protruding outwardly. The electrode tabs may be each provided as an electrically conductive body configured to provide an electric current path to and from the electrode assembly. Any one, some or each of the electrode tabs may be provided as a thin elongated strip made of an electrically conductive material. The electrode tabs may be made of a metal, such as copper, aluminum or steel. The electrode tabs may comprise any one, some or all of the features of the electrode tabs as disclosed herein, including the description below with respect to the drawings, unless indicated otherwise or technically inappropriate.

The electrode tabs may be electrically and/or physically connected to one of the positive and negative electrodes of the electrode assembly. Any one, some or each of the electrode tabs may be formed integrally with (i.e., be an integral part of) the respective one of the positive and negative electrodes. For example, any one, some or each of the electrode tabs may be formed integrally (i.e., as a single piece) with an electrically conductive substrate of the respective electrode (i.e., one among the positive and negative electrodes). Alternatively or additionally, any one, some or each of the electrode tabs may be provided separately (i.e., as a separate and individual piece) from the electrodes and attached to (i.e., physically connected to) the respective one of the positive and negative electrodes. For example, an electrode (i.e., one among the positive and negative electrodes) may be provided with an uncoated portion in which an electrically conductive substrate is exposed without being coated with an electrode active material, and one of the electrode tabs may be attached, for example by welding, to said uncoated portion of the electrode.

The electrode tabs may be arranged, shaped and dimensioned so as to protrude outwardly. Here, the electrode tabs protrude outwardly may mean that the electrode tabs extend from (out of) a remaining body (which may be a majority of volume and/or a majority of mass of the electrode assembly as a whole) of the electrode assembly. Accordingly, the electrode tabs may extend outward from (a remainder, a body part or a bulk part, or an electrode portion of) the electrode assembly. The electrode tabs may protrude outwardly in an upward direction. The upward direction may be parallel to the winding axis of the electrode assembly. The upward direction may be perpendicular to the thickness direction of the electrode assembly. The upward direction may be a direction from the electrode assembly toward the current collector, the current collector being arranged on, or on top of or above, the electrode assembly. Additionally or alternatively, the electrode tabs may protrude outwardly in a downward direction that is opposite to the upward direction as described.

The number and shapes of the electrode tabs may be determined by the size, shape and type of the secondary battery (e.g., pouch-type, cylindrical or prismatic battery cell, or any other type). Any one, some or each of the negative electrodes of the electrode assembly may be provided with a respective electrode tab or a respective plurality of electrode tabs. Any one, some or each of the positive electrodes of the electrode assembly may be provided with a respective electrode tab or a respective plurality of electrode tabs. Generally, the electrode assembly may comprise one positive electrode or a plurality of positive electrodes; the electrode assembly may comprise one negative electrode or a plurality of negative electrodes.

The secondary battery may comprise a current collector. The current collector may be disposed between the electrode assembly and the cap assembly as described herein. The current collector may be arranged, shaped and dimensioned so as to provide an electric current path from and to the electrode assembly. In particular, the current collector may be configured so as to provide an electric current path between the electrode assembly and a current collecting protrusion as described in detail below. The current collector may comprise any one, some or all of the features of the current collector as disclosed herein, including the description below with respect to the drawings, unless indicated otherwise or technically inappropriate.

The current collector may be made of an electrically conductive material. The current collector may be made of, or contain, metal. The metal may include, for example, copper, aluminum or steel. The current collector may be provided as a plate that extends between two opposite major surfaces. The major surfaces of the current collector may be substantially parallel to each other. The current collector may be shaped so that any one of the major surfaces of the current collector in one particular portion is inclined and/or curved with respect to another portion adjacent thereto.

At least one of the electrode tabs may be connected to the current collector. Alternatively or additionally, one, some or all of the electrode tabs may be coupled to the current collector. As described in detail with reference to the drawings below, the electrode tabs may be combined into one or more bundles, and the one or more bundles may be coupled to (directly connected to, physically attached to) the current collector. In such a case, the term first electrode tab may be used to designate one of the bundles coupled to the current collector, and the term second electrode tab may be used to designate another one of the bundles coupled to the current collector. The first electrode tab and the second electrode tab may each implement any one, some or each of the features of the electrode tabs disclosed herein, including the description below with reference to the drawings, unless indicated otherwise or technically inappropriate.

The electrode assembly may be configured so that the electrode tabs connected to electrodes of a first polarity protrude from one side of the electrode assembly, and the electrode tabs connected to electrodes of a second polarity, that is different from (opposite to) the first polarity, protrude from another side that is opposite to the one side of the electrode assembly. In such an example, one current collector may be provided on the one side of the electrode assembly, and another current collector may be provided on the opposite side of the electrode assembly. The current collector provided on either side of the electrode assembly may comprise any one, some or all of the features of the current collector as disclosed herein, including the description below with reference to the drawings, unless indicated otherwise or technically inappropriate.

Alternatively, the electrode assembly may be configured so that the electrode tabs connected to electrodes of a first polarity protrude from one side of the electrode assembly, and the electrode tabs connected to electrodes of a second polarity, that is different from (opposite to) the first polarity, protrude from the same side of the electrode assembly. In such an example, two current collectors may be provided on said one side of the electrode assembly in a manner spaced apart from each other. Any one of the current collectors in such an example may comprise any one, some or all of the features of the current collector as disclosed herein, including the description below with reference to the drawings, unless indicated otherwise or technically inappropriate.

Furthermore, it is understood that the electrode tabs of both polarities may protrude from two opposite sides of the electrode assembly at the same time, so that each of said two opposite sides of the electrode assembly may be suited to be provided with current collectors of both polarities.

The secondary battery may comprise a current collecting protrusion extending away from the electrode assembly. The current collecting protrusion may extend toward and/or through the cap assembly. The current collecting protrusion may be provided as a separate piece and arranged in physical contact with the current collector. Alternatively, the current collecting protrusion may be provided as an integral part of the current collector. The current collecting protrusion may comprise any one, some or all of the features of the current collecting protrusion as disclosed herein, including the description below with reference to the drawings, unless technically inappropriate or indicated otherwise.

The current collecting protrusion may extend so as to conduct electric current in a direction that is different from a direction of electric current flowing between the electrode tabs and the current collecting protrusion. The current collecting protrusion may extend so as to conduct electric current and change the direction of the same with respect to electric current flowing between the electrode tabs and the current collecting protrusion. The current collecting protrusion may extend so as to change a direction of the electric current that flows from or to the electrode tabs along the current collector. In particular, the current collecting protrusion may extend substantially perpendicular to (a major surface of) the current collector. The current collecting protrusion may extend so as to change a direction of the electric current to be substantially perpendicular to a plane along which electric current flows to and from the electrode tabs in the current collector. The current collecting protrusion may have a shape elongated in a direction that is out of plane of the current collector.

The secondary battery may comprise a battery casing accommodating the electrode assembly. The battery casing may be shaped and dimensioned so as to receive and withhold the electrode assembly. The battery casing may have a sidewall defining a rectangular tube (i.e., a tubular sidewall having a rectangular cross-section, or a box-shaped sidewall). The sidewall may be open at one end and the other end may be closed. Alternatively, the sidewall may be open at both ends. The cap assembly may be configured to be coupled to (and close and/or seal) the open end (or to one of the open ends) of the battery casing. The secondary battery may comprise another cap assembly that may be provided in the same manner as the cap assembly and coupled to the other one of the open ends of the battery casing. The battery casing may comprise any one, some or all of the features of the battery casing as disclosed herein, including the description below with respect to the drawings, unless indicated otherwise or technically inappropriate.

In particular, the battery casing may be a prismatic battery casing. The battery casing may be made of metal. The battery casing may have two opposite major surfaces and two opposite lateral surfaces each extending between the two major surfaces, thereby forming a rectangular tube (i.e., a tubular sidewall having a rectangular cross-section, or a box-shaped sidewall).

In another example, the battery casing may have a cylindrical sidewall. The sidewall may be open at one end and the other end may be closed. Alternatively, the sidewall may be open at both ends. The cap assembly may be configured to be coupled to (and close and/or seal) the open end (or to one of the open ends) of the battery casing. The secondary battery may comprise another cap assembly that may be provided in the same manner as the cap assembly and coupled to the other one of the open ends of the battery casing.

The cap assembly may be coupled to the battery casing such that the current collector is arranged between the electrode assembly and the cap assembly. The cap assembly may comprise a base plate, a gasket and a terminal. The base plate, gasket and terminal may be arranged (e.g. stacked) upon one another in that order in a direction away from the electrode assembly. The base plate, gasket and terminal may be each provided with a basic shape of a plate having two major surfaces in parallel, and be arranged so that the major surfaces of the base plate, gasket and terminal are arranged substantially parallel to one another. The cap assembly may comprise any one, some or all of the features of the cap assembly as disclosed herein, including the description below with respect to the drawings, unless indicated otherwise or technically inappropriate.

The base plate may have a first surface facing away from the electrode assembly and a second surface opposite the first surface. The base plate may have a plate shape having the first and second surfaces as major surfaces that are distanced from each other by a thickness of the base plate. The thickness of the base plate may be substantially uniform (except for the seating portion in some examples, as described herein). The base plate may extend so as to occupy the open end of the battery casing. Specifically, the base plate may extend so as to occupy the entire open end of the battery casing or a major part (e.g., 80% or more when viewed in a direction perpendicular to the first surface of the base plate) of the open end of the battery casing. The base plate may comprise any one, some or all of the features of the base plate as disclosed herein, including the description below with respect to the drawings, unless indicated otherwise or technically inappropriate.

The base plate may comprise, on the first surface thereof, a structure element that is defined by a change in thickness of the base plate. The structure element of the base plate may be configured to fix the base plate and the gasket relative to each other. The structure element of the base plate may refer to a three-dimensional structural feature on the first surface of the base plate defined by a local variation in thickness of the base plate. In particular, the structure element of the base plate may be a surface-shaping feature resulting from local variation in the thickness of the base plate. The structure element of the base plate may be a locally contoured feature formed by the thickness profile of the base plate on its first surface. The structure element of the base plate may include any one, some or all of the following: a projection from the first surface of the base plate, a recess formed in the first surface of the base plate, a step formed on the first surface of the base plate, a raised portion on the first surface of the base plate, a depressed portion on the first surface of the base plate, a locking portion on the first surface of the base plate, a rib, or a groove. The structure element of the base plate may comprise any one, some or all of the features of the structure element of the base plate as disclosed herein, including the description below with respect to the drawings, unless indicated otherwise or technically inappropriate.

The gasket may be arranged on the first surface of the base plate. The gasket may engage the structure element of the base plate that is formed on the first surface thereof. The structure element of the base plate may be configured to be engaged by the gasket, or configured to engage with the gasket. Herein, the term "engage" may mean that the gasket comes into mechanical interaction with the structure element of the base plate. With the gasket engaging the structure element of the base plate, the gasket may contact (additionally or alternatively: fit to, mates with, at least partially surround, at least partially receive, interlock with, or positioned and retained by) the structure element of the base plate. Furthermore, the term "engage with" may mean that the gasket and the structure element of the base plate are shaped and dimensioned to be form a form-fit connection. With the gasket engaging the structure element of the base plate, the gasket may be prevented by the structure element from rotating, shifting, or being misaligned with respect to the base plate. The gasket may comprise any one, some or all of the features of the gasket as disclosed herein, including the description below with respect to the drawings, unless indicated otherwise or technically inappropriate.

Where reference is made to a locking portion, protrusion and periphery of the seating portion below, including the description of the drawings, it is understood that the structure element of the base element may comprise any of the mentioned examples in combination even if not explicitly mentioned or illustrated in the drawings.

The terminal may be arranged on the gasket. The terminal may be a component of the secondary battery configured to provide an electrically conductive area to be physically contacted by an external electric contact, such as a load, a battery recharger, a test equipment, etc. The terminal may provide a flat area that is exposed to the outside (of the secondary battery) and is electrically conductive. The term terminal may be used herein in accordance with the terminology that is common in the field of battery manufacturing. The terminal may comprise any one, some or all of the features of the terminal as disclosed herein, including the description below with respect to the drawings, unless indicated otherwise or technically inappropriate.

In some examples, the base plate and the gasket may each comprise a respective through-hole, and the through-holes of the base plate and the gasket are aligned to provide a continuous passage. Additionally or alternatively, the base plate, the gasket and the terminal each comprise a respective through-hole, and the through-holes of the base plate, the gasket and the terminal are aligned to provide a continuous passage. The through-holes may each comprise any one, some or all of the features of the respective through-hole as disclosed herein, including the description below with respect to the drawings, unless indicated otherwise or technically inappropriate.

Furthermore, the current collector may have a current collecting protrusion extending through the continuous passage formed by the through-holes of the base plate and the gasket, and optionally the through-hole of the terminal.

As mentioned above, the base plate may have a basic shape of a plate with a first surface facing away from the electrode assembly and a second surface opposite the first surface. The first and second surfaces may be substantially parallel to each other and form two major surfaces of the base plate. The through-hole of the base plate may extend through the base plate, thereby providing a hollow passage through the base plate. The through-hole may extend perpendicular to one or both of the major surfaces of the base plate.

The gasket may have a basic shape of a plate with a first surface facing away from the electrode assembly and a second surface opposite the first surface. The first and second surfaces may be substantially parallel to each other and form two major surfaces of the gasket. The through-hole of the gasket may extend through the gasket, thereby providing a hollow passage through the gasket. The through-hole may extend perpendicular to one or both of the major surfaces of the gasket.

The terminal may have a basic shape of a plate with a first surface facing away from the electrode assembly and a second surface opposite the first surface. The first and second surfaces may be substantially parallel to each other and form two major surfaces of the terminal. The through-hole of the terminal may extend through the terminal, thereby providing a hollow passage through the terminal. The through-hole may extend perpendicular to one or both of the major surfaces of the terminal.

As mentioned above, the base plate, gasket and terminal may be arranged (e.g. stacked) upon one another in that order in a direction away from the electrode assembly. The base plate, gasket and terminal may be each provided with a basic shape of a plate having two major surfaces in parallel, and be arranged so that the major surfaces of the base plate, gasket and terminal are arranged substantially parallel to one another. The through-holes of the base plate and the gasket, and optionally the through-hole of the terminal may be aligned so as to provide a continuous passage. The through-holes of the base plate and the gasket, and optionally the through-hole of the terminal may have cross-sections of substantially same size and/or same shape (when viewed in a direction perpendicular to any one of the first and second surfaces of the base plate, gasket or the terminal). By being aligned, the through-holes of the base plate and the gasket, and optionally the through-hole of the terminal may be arranged to be concentric and/or congruent when viewed in a direction perpendicular to any one of the first and second surfaces of the base plate, gasket or the terminal.

The through-holes being aligned may allow the current collector, particularly a current collecting protrusion thereof as described herein, to extend therethrough (i.e., through the continuous passage formed thereby). For example, the current collector or the current collecting protrusion may extend up to or close to the first surface of the terminal. The current collector or the current collecting protrusion may extend such that an end thereof is flush with the first surface of the terminal. The current collector or the current collecting protrusion and the terminal may be welded at a position exposed to the outside.

The current collector or the current collecting protrusion may be inserted into the continuous passage formed by the through-holes of the base plate and the gasket, and optionally the through-hole of the terminal. The through-holes of the base plate and the gasket, and optionally the through-hole of the terminal may be shaped and dimensioned so as to allow the current collector or the current collecting protrusion to pass therethrough. A cross-section of the through-holes of the base plate and the gasket, and optionally the through-hole of the terminal may be shaped and dimensioned to accommodate a cross-section of the current collector or the current collecting protrusion. In particular, the through-holes of the base plate and the gasket, and optionally the through-hole of the terminal may have a same shape as the current collector or the current collecting protrusion. The shape of the through-holes of the base plate and the gasket, and optionally the through-hole of the terminal, may be, for example, circular, elliptical or polygonal (e.g., rectangular, pentagonal, hexagonal, octagonal, etc.). A cross-sectional area of the through-hole may be approximately equal or larger than a cross-sectional area of the current collector or the current collecting protrusion.

Accordingly, the secondary battery as disclosed herein may be provided with a cap assembly that is coupled to an open end of the battery casing (and close and/or seal the same). At the same time, the current collector or the current collecting protrusion may extend through the cap assembly via the continuous passage defined by the through-holes of the base plate and the gasket, and optionally the through-hole of the terminal. Accordingly, an electrical contact between the electrode assembly and the terminal may be established while supporting the casing of the secondary battery by the cap assembly. Also, a stable distance may be maintained between the cap assembly and the electrode assembly.

In specific example, a diameter of the current collecting protrusion may be equal to an inner diameter of the opening (e.g., of the stopper, see below). A diameter of the support portion may be equal to a diameter of the recessed region of the current collector. In such examples, when the current collecting protrusion engages with the current collector, the current collector or the current collecting protrusion may fit into the opening, and the support portion may fit into the recessed region

In some examples, a first electrode tab and a second electrode tab of the electrode tabs of the electrode assembly may be attached to the current collector so that the first electrode tab and the second electrode tab are spaced apart from each other on the current collector.

Accordingly, the first electrode tab and/or a second electrode tab (or more generally, any two different electrode tabs) of the electrode tabs may be coupled to the current collector. At least two different electrode tabs, the first electrode tab and the second electrode tab, may be coupled to the current collector in a manner to provide electrical and physical connection to the current collector. The first electrode tab and/or the second electrode tab may be directly connected to the current collector. In other words, the first electrode tab and/or the second electrode tab may be physically attached to the current collector. The first electrode tab and the second electrode tab may be connected to the same electrode or to electrodes of the same polarity (i.e., either to positive electrodes or to negative electrodes) of the electrode assembly.

The first electrode tab and the second electrode tab may be spaced apart from each other on the current collector. Accordingly, the first electrode and the second electrode may be coupled to different portions of the current collector that are spaced apart from each other. In other words, the first electrode tab and the second electrode tab may be coupled to (physically attached to, directly connected to) the current collector at separate positions. As mentioned, the first electrode tab and the second electrode tab may each represent a bundle of electrode tabs. Accordingly, the secondary battery as disclosed herein may allow for increasing a contact area between the electrodes and the current collector and thus increasing the effective cross-section for electric current. Also, said structure allows for a large number of electrode tabs to be coupled to the current collector without loss of compactness.

The first and second electrode tabs may be disposed spaced apart from each other by a predetermined distance on the current collector. A separation distance between the first and second electrode tabs may be 5 to 15% of a size of the current collector in a direction in which the separation distance is measured. If the separation distance between the plurality of first and second electrode tabs is smaller than 5% of the said size of the current collector, burrs from welding the first and second electrode tabs to the current collector may accumulate between the electrode tabs, so that the weld result may become bulky and non-uniform. If the separation distance between the first and second electrode tabs exceeds 15% of said size of the current collector, there may not be enough room left for reasonably arranging the current collecting protrusion and the electrode tabs on the current collector.

The current collector may comprise a first current collecting portion onto which the first electrode tab is welded. The current collector may comprise a second current collecting portion onto which the second electrode tab is welded. Accordingly, the positions on the current collector at which the first and second electrode tabs are welded, respectively, are referred to herein as the first and second current collecting portions. As mentioned, each of the first and second electrode tabs may be a single electrode tab or a bundle of electrode tabs. As the first and second electrode tabs are spaced from each other on the current collector, the first and second current collecting portions may be spaced apart from each other as well. The first current collecting portion and the second current collecting portion may comprise any one, some or all of the features of the first current collecting portion and the second current collecting portion, respectively, as described below with reference to the drawings, unless technically inappropriate or indicated otherwise

The first electrode tab and the second electrode tab may be coupled to the current collector on opposite sides with respect to the current collecting protrusion. Accordingly, the first electrode tab and the second electrode tab may be arranged symmetrically on the current collector with respect to the current collecting protrusion. Alternatively, the first electrode tab and the second electrode tab may be coupled to the current collector on a same side with respect to the current collecting protrusion. Accordingly, the first electrode tab and the second electrode tab may be arranged asymmetrically on the current collector with respect to the current collecting protrusion.

In some examples, the battery casing may be a prismatic casing comprising a sidewall defining a rectangular tube extending between two ends. At least one of the two ends of the battery casing may be open and may be closed by the cap assembly. The battery casing may be as described above. The battery casing may be shaped and dimensioned so as to receive and withhold the electrode assembly. The battery casing may have a sidewall defining a rectangular tube (i.e., a tubular sidewall having a rectangular cross-section, or a box-shaped sidewall). The sidewall may be open at one end and the other end may be closed. Alternatively, the sidewall may be open at both ends. The cap assembly may be configured to be coupled to (and close and/or seal) the open end (or to one of the open ends) of the battery casing. The secondary battery may comprise another cap assembly that is coupled to the other one of the open ends of the battery casing. The battery casing may have two opposite major surfaces and two opposite lateral surfaces each extending between the two major surfaces, thereby forming a rectangular tube (i.e., a tubular sidewall having a rectangular cross-section, or a box-shaped sidewall).

Alternatively, the battery casing may comprise a cylindrical sidewall extending between two ends. At least one of the two ends of the batter casing is open and is closed by the cap assembly. The sidewall may be open at one end and the other end may be closed. Alternatively, the sidewall may be open at both ends. The cap assembly may be configured to be coupled to (and close and/or seal) the open end (or to one of the open ends) of the battery casing. The secondary battery may comprise another cap assembly that is coupled to the other one of the open ends of the battery casing.

In some examples, the gasket may comprise a first surface facing away from the electrode assembly and a second surface opposite the first surface. The gasket may be arranged so that the second surface of the gasket rests against the first surface of the base plate. The second surface of the gasket may be shaped and/or dimensioned so as to engage the structure element on the first surface of the base plate. The gasket engaging the structure element of the base plate may be as described herein.

In some examples, the gasket may comprise a first surface facing away from the electrode assembly and a second surface opposite the first surface. The gasket may comprise, on the first surface thereof, a structure element that is defined by a change in thickness of the gasket.

In further examples, the terminal may comprise a first surface facing away from the electrode assembly and a second surface opposite the first surface. The terminal may be arranged so that the second surface of the terminal rests against the first surface of the gasket. The second surface of the terminal may be shaped and/or dimensioned so as to engage the structure element on the first surface of the gasket

Accordingly, the gasket may comprise a structure element configured to fix the gasket and the terminal relative to each other. The structure element of the gasket may refer to a three-dimensional structural feature on the first surface of the gasket defined by a local variation in thickness of the gasket. In particular, the structure element of the gasket may be a surface-shaping feature resulting from local variation in the thickness of the gasket. The structure element of the gasket may be a locally contoured feature formed by the thickness profile of the gasket on its first surface. The structure element of the gasket may include any one, some or all of the following: a projection from the first surface of the gasket, a recess formed in the first surface of the gasket, a step formed on the first surface of the gasket, a raised portion on the first surface of the gasket, a depressed portion on the first surface of the gasket, a locking portion on the first surface of the gasket, a rib, or a groove. The structure element of the gasket may comprise any one, some or all of the features of the structure element of the gasket as disclosed herein, including the description below with respect to the drawings, unless indicated otherwise or technically inappropriate.

The terminal may be arranged on the first surface of the gasket. The terminal may engage the structure element of the gasket that is formed on the first surface thereof. The structure element of the terminal may be configured to be engaged by the gasket, or configured to engage with the gasket. Herein, the term "engage" may be as described above and may mean that the terminal comes into mechanical interaction with the structure element of the gasket. With the terminal engaging the structure element of the gasket, the terminal may contact (additionally or alternatively: fit to, mates with, at least partially surround, at least partially receive, interlock with, or positioned and retained by) the structure element of the gasket. Furthermore, the term "engage with" may mean that the terminal and the structure element of the gasket are shaped and dimensioned to be form a form-fit connection. With the terminal engaging the structure element of the gasket, the terminal may be prevented by the structure element from rotating, shifting, or being misaligned with respect to the gasket. The terminal may comprise any one, some or all of the features of the terminal as disclosed herein, including the description below with respect to the drawings, unless indicated otherwise or technically inappropriate.

In some examples, the base plate may comprise, in the first surface thereof, a seating portion in and/or on which the gasket is arranged. The seating portion may be provided as a recess or a depressed portion formed in the first surface of the base plate. The seating portion may have a surface that is parallel to the first surface of the base plate. The base plate may have a reduced thickness in the seating portion. The seating portion and the gasket, or a lower surface portion thereof as described below, may have shapes that are complementary to each other. The seating portion and the gasket, or a lower surface portion thereof as described below, may form a form-fit connection. Alternatively, the gasket or its lower surface portion may be shaped and sized so as to be seated onto and into the seating portion of the base plate.

In some examples, the seating portion of the base plate may have a polygonal shape, elliptical shape or a circular shape when viewed in a direction perpendicular to the first surface of the base plate. Such a geometric shape may facilitate manufacturing of the secondary battery.

In some examples, the seating portion is recessed relative to a surrounding region of the first surface, the seating portion having a depth corresponding to 20% to 50% of a thickness of the base plate. With the depth of the seating portion being in this range, the gasket may be mounted stably on the base plate without deteriorating the mechanical strength of the base plate itself.

Additionally or alternatively, an area of the seating portion of the base plate, when viewed in a direction perpendicular to the first surface of the base plate, corresponds to 8% to 20% of an area of the seating portion in a plane parallel to the upper end of the battery casing. With the occupancy of the seating portion being in this range, a good balance may be found between the sizes of the gasket and the base plate for manufacturing.

In some examples, the base plate may comprise a through-hole having an area corresponding to 5% to 20% of an area of the seating portion when viewed in a direction perpendicular to the first surface of the base plate. The through-hole of the base plate may be as described above. With the size of the through-hole being in this range, a good balance may be found between the sizes of the through-hole and the base plate for manufacturing.

In some examples, the seating portion may be recessed relative to a surrounding region of the first surface of the base plate. The structure element of the base plate may comprise a locking portion extending from the surrounding region of the first surface of the base plate into the seating portion, the locking portion having a thickness greater than a thickness of the seating portion. The thicknesses of the base plate, the seating portion and the locking portion may be determined in a direction perpendicular to the first surface of the base plate. In particular, the locking portion may have a thickness that is equal to a thickness of the base plate surrounding the seating portion. The locking portion may be provided as a three-dimensional portion extending into the seating portion when viewed in a direction perpendicular to the first surface of the base plate. The locking portion may be configured to be engaged by, or to engage with, the gasket as described herein.

In some examples, the structure element of the base plate may further comprise an additional locking portion extending from the surrounding region of the first surface of the base plate into the seating portion. The additional locking portion may have a thickness greater than a thickness of the seating portion. The locking portion and the additional locking portion may be arranged so as to be spaced from each other, for example arranged opposite each other within the seating portion when viewed perpendicular to the first surface of the base plate.

The additional locking portion may be provided in an identical manner as the locking portion as described herein, except for the positioning. The locking portion and the additional locking portion may be positioned so as to provide a stable fixation of the gasket with respect to the base plate, e.g., so as to prevent displacement, rotation or misalignment of the gasket relative to the base plate.

In some examples, when viewed in a direction perpendicular to the first surface of the base plate, the locking portion may have a shape that is polygonal, semicircular or circular. Such symmetrical geometric shapes may facilitate manufacturing of the secondary battery, and also facilitate providing a stable fixation of the gasket relative to the base plate.

In some examples, the locking portion may occupy 0.05% to 10% of an area of the seating portion when viewed in a direction perpendicular to the first surface of the base plate. Accordingly, sufficient space may be preserved for the surface contact of the gasket in and on the seating portion, while securing sufficient size of the locking portion.

In some examples, the structure element of the base plate may satisfy Equation 1 as follows:
[Equation 1] $S = 1 / 2 ⋅ AB / C ⋅ N 2$
where A is a longer dimension of the base plate in mm, B is a ratio of a width of the seating portion to a width of a through-hole formed in the base plate, C is a thickness of the base plate in mm, N is a number of locking portions, and S is 0.01 to 0.1.

With Equation 1 being satisfied, sufficient space may be preserved for the surface contact of the gasket in and on the seating portion, while securing sufficient size of the locking portion for effectively preventing displacement, rotation or misalignment of the gasket with respect to the base plate.

In some examples, an extent of the locking portion, along a shortest dimension of the seating portion in a plane parallel to the first surface of the base plate, may correspond to 10% to 80% of an extent of the seating portion in the same direction. With the locking portion being in this range, a stable fixation of the gasket to the base plate may be achieved.

In some examples, an extent of the locking portion, along a longest dimension of the seating portion in a plane parallel to the upper end of the battery casing, may correspond to 3% to 10% of an extent of the seating portion in the same direction. With the locking portion being in this range, a stable fixation of the gasket to the base plate may be achieved.

In some examples, an extent of the locking portion, along a thickness direction of the cap assembly, may correspond to 10% to 70% of a height of the terminal in a direction perpendicular to the first surface of the base plate. With the locking portion being in this range, a stable fixation of the gasket to the base plate may be achieved.

In some examples, the gasket may comprise, in the second surface thereof, a fixing portion positioned, shaped and dimensioned so as to receive the locking portion of the base plate when the second surface of the gasket rests against the first surface of the base plate, thereby engaging the structure element of the base plate. The fixing portion may be configured to form a form-fit connection with the locking portion of the base plate. Accordingly, the gasket may be effectively prevented from displacement, rotation or misalignment with respect to the base plate.

In some examples, the structure element of the gasket may be formed as an upward projection in the first surface of the gasket at a position corresponding to the fixing portion. Accordingly, the fixing portion of the gasket that is configured to engage and/or receive the locking portion of the base plate so as to prevent the gasket from displacement, rotation or misalignment with respect to the base plate.

In some examples, the structure element of the base plate may comprise a plurality of locking portions each extending from the surrounding region of the first surface of the base plate into the seating portion and each having a thickness greater than the thickness of the seating portion. The plurality of locking portions may be arranged equidistantly from one another along a periphery of the seating portion. Accordingly, the fixation of the gasket to the base plate may be further improved while also facilitating the manufacture of the secondary battery.

As mentioned above, the term structure element may generally refer to a three-dimensional structural feature defined by a local variation in thickness. Herein, the structure element may comprise one or more distinct elements (portions) that are provided separately. Accordingly, in said examples, the structure element of the base plate may comprise a plurality of locking portions. The locking portions may be arranged equidistantly from one another along a periphery of the seating portion, for example symmetrically with respect to a symmetrical point when viewed in a direction perpendicular to the first surface of the base plate. For example, the symmetrical point may coincide with the geometric center of the seating portion when viewed in a direction perpendicular to the first surface of the base plate.

In some examples, the gasket may have a raised edge along a periphery of the gasket. The raised edge may be referred to herein also as a rib. The raised edge may be formed by a sidewall formed along the periphery of the gasket, the sidewall erecting from a first surface of the gasket that faces away from the electrode assembly in a direction perpendicular to the first surface of the gasket. The raised edge of the gasket may be utilized or exploited to fix the terminal to the gasket so as to prevent displacement, rotation or misalignment of the terminal with respect to the gasket.

In some examples, the raised edge may extend from the first surface of the gasket by a height that corresponds to 30% to 80% of a height of the terminal in a direction perpendicular to the first surface of the base plate. Any height mentioned herein may be measured in said direction perpendicular to the first surface of the base plate. With the raised edge being in this range, the terminal may be safely secured while avoiding excessive use of material, energy and cost for manufacturing the secondary battery.

In some examples, the raised edge may have a wall thickness 0.5 mm to 1.2 mm. With the raised edge being in this range, the terminal may be safely secured while avoiding excessive use of material, energy and cost for manufacturing the secondary battery.

In some examples, the gasket may comprise a lower surface portion resting against the seating portion and a lateral extension portion extending outward from the lower surface portion over a peripheral edge of the seating portion, thereby engaging the peripheral edge of the seating portion as structure element of the base plate.

Accordingly, the lower surface portion of the gasket may provide a surface contact with the first surface of the base plate, particularly in the seating portion. The lateral extension portion of the gasket may extend so that a part of the gasket is received and secured in the seating portion.

In some examples, the second surface of the terminal may be shaped and dimensioned so as to rest against and conform to the lower surface portion and the lateral extension portion. Accordingly, the second surface of the terminal may be configured to be received and secured on the first surface both in the lower surface portion and the lateral extension portion. The terminal may be fixed to the gasket so as to prevent displacement, rotation or misalignment with respect to the gasket.

In some examples, an upper surface of the lower surface portion may lie in a first plane and an upper surface of the lateral extension portion lies in a second plane that is offset from the first plane in a direction perpendicular to the first surface of the gasket. Accordingly, the lower surface portion and the lateral extension portion of the gasket may together form a stepped structure that may be utilized to fix the gasket to the base plate as well as to fix the terminal to the gasket. Hereinafter, the terms upper surface and lower surface may be used interchangeably with the first surface and the second surface, respectively, for ease of reference to the drawings.

In some examples, an area of the lateral extension portion may correspond to 50% to 80% of an area of the lower surface portion when viewed in a direction perpendicular to the first surface of the gasket. With the dimension of the gasket, particularly the lateral extension portion thereof, being in this range, the gasket may be securely fixed to the base plate, and the terminal may be securely fixed to the gasket.

In some examples, the lateral extension portion may extend outward from the lower surface region by 2 mm to 4 mm. The outward direction may collectively refer to all directions that is perpendicular to the outline of the lower surface region. With the dimension of the gasket, particularly the lateral extension portion thereof, being in this range, the gasket may be securely fixed to the base plate, and the terminal may be securely fixed to the gasket.

In some examples, the lower surface portion may be shaped and dimensioned so as to fit to the seating portion. Accordingly, the gasket may be securely fixed to the base plate, and the terminal may be securely fixed to the gasket.

In some examples, the terminal may have an outer periphery having a uniform thickness and a central protruding portion that extends downward to rest against the lower surface portion of the gasket. An extent of the central protruding portion in a downward direction may be equal to a distance between the first plane and the second plane. Accordingly, the central protruding portion may be received and secured in the recess provided by the lower surface portion being depressed with respect to the lateral extension region.

In some examples. the structure element of the base plate may comprise a protrusion protruding from the first surface of the base plate. The gasket may comprise, in a second surface thereof, a fixing portion to engage the protrusion, for example by receiving the protrusion in a recess formed in the fixing portion.

In some examples, the base plate may comprise, in the first surface thereof, a seating portion in and/or on which the gasket is arranged. The protrusion may be formed within the seating portion.

In some examples, the seating portion may have a polygonal or circular shape when viewed in a direction perpendicular to the first surface of the base plate. The structure element of the base plate may further comprise a plurality of protrusions including said protrusion that are disposed symmetrically and equidistantly with respect to a geometric center of the polygonal or circular shape of the base plate. Such configuration may facilitate the manufacture of the secondary battery and a secure fixation of the gasket to the base plate.

In some examples, the protrusion may have a pillar shape with a base that has one of: a cylindrical shape, an elliptical cylindrical shape, and a polygonal shape. Such symmetrical geometric shape may facilitate the manufacture of the secondary battery and provide a secure fixation of the gasket to the base plate.

In some examples, the seating portion may have a polygonal shape when viewed in a direction perpendicular to the upper end of the battery casing. The base plate may comprise protrusions, comprising the protrusion as mentioned, according to the number of corners of the polygonal shape, wherein the protrusions are disposed symmetrically and equidistantly with respect to a geometric center of the polygonal or circular shape of the base plate. Such symmetrical configuration may facilitate the manufacture of the secondary battery and a secure fixation of the gasket to the base plate.

In some examples, the protrusion occupy 1% to 10% of an area of the seating portion when viewed in a direction perpendicular to the upper end of the battery casing. With the protrusion of the base plate being within this range, a good contact of the gasket to the base plate may be provided while also securing the gasket to the base plate so as to prevent displacement, rotation or misalignment of the gasket with respect to the base plate.

In some examples, the base plate is provided so as to satisfy Equation 2 as follows:
[Equation 2] $S = 1 / 8 ⋅ AB / C ⋅ N 2$
where A is a size of the base plate along its longest extension in mm, B is a ratio of width of the seating portion to a width of the through-hole formed through the base plate, C is a thickness of the base plate in mm, N is a number of protrusions, and S is 0.02 to 0.1.

With Equation 2 being satisfied, sufficient space may be preserved for the surface contact of the gasket in and on the seating portion, while securing sufficient size of the protrusion(s) for effectively preventing displacement, rotation or misalignment of the gasket with respect to the base plate.

In some examples, the gasket may comprise a same number of fixing portions as the number of the protrusions, each of the fixing portions of the gasket being configured to receive a respective one of the protrusions of the base plate. Accordingly, fixation of the gasket to the base plate may be further improved in terms of preventing displacement, rotation or misalignment of the gasket with respect to the base plate.

In some examples, the structure element of the gasket is formed by projections in the first surface of the gasket corresponding to the fixing portions of the gasket. The terminal may comprise recesses corresponding to the projections to receive the projections. Accordingly, fixation of the terminal to the gasket may be improved in terms of preventing displacement, rotation or misalignment of the terminal with respect to the gasket.

In some examples, the current collecting protrusion of the current collector may be welded to the terminal at the first surface of the terminal. The current collector or the current collecting protrusion and the terminal may be welded together from outside along a periphery of the through-hole. In particular, the terminal and the current collector or the current collecting protrusion may be welded at an (outward) end of the current collector or the current collecting protrusion. In particular, the terminal and the current collecting protrusion may be welded at an (outward) end of the current collecting protrusion.

Welding from outside may mean that the energy (e.g., from a laser source) for welding is applied from (the) outside of the secondary battery. As being welded from outside, the periphery of the through-hole may refer to a periphery along an outer end (opening) of the through-hole formed on an outer surface of the terminal.

In some examples, the secondary battery may further comprise an annular gasket inserted into a through-hole of the base plate and in contact with the gasket. The secondary battery may further comprise a pin extending through the through-hole of the base plate and the annular gasket, wherein the pin is, for example, a rivet to be deformed at one end thereof.

In some examples, the pin may be a hollow pin configured so that a current collecting protrusion of the current collector extends through the pin.

Further disclosed is a secondary battery which may include an electrode assembly, a current collector, a battery casing, and a cap assembly. The electrode assembly may include an electrode portion and a plurality of electrode tabs formed at one end of the electrode portion. The current collector may be disposed on an upper side of the electrode tabs and be welded to the electrode tabs. A battery casing may have an open upper end and accommodate the electrode assembly therein. A cap assembly may be coupled to the upper end of the battery casing. The cap assembly may include a base plate, a gasket, which may be referred to herein to as an upper gasket, and a terminal. The base plate may include a seating portion in which a through-hole, which may be referred to herein as an opening, is formed and at least one locking portion. The upper gasket may be disposed in the seating portion of the base plate, and include a bottom portion in which a through-hole, which may be referred to herein as an opening, is formed, a fixing portion disposed on at least one side of the bottom portion and coupled to the locking portion, and a raised edge, which may be referred to herein as a rib, formed along an edge of an upper surface of the bottom portion. The terminal may be disposed on an upper surface of the upper gasket, and have at least one recess, which may include a groove, formed in a lower surface thereof and a through-hole, which may be referred to herein as an opening, formed therein. Herein, the terms upper surface and lower surface may be used interchangeably with the first surface and the second surface as described above, respectively, for ease of reference to the drawings.

The seating portion may have a quadrilateral shape or a circular shape.

A welding region may be formed on an outer periphery of a lower surface of a support portion.

A depth d1 of the seating portion may be 20 to 30% of a thickness t1 of the base plate.

An area of the opening of the base plate may be 5 to 15% of an area of the seating portion.

Two locking portions may be provided and are respectively disposed on opposite ends of the seating portion.

The locking portion may have a quadrilateral shape or a semicircular shape.

A sum of areas of the locking portions may be 1 to 10% of an area of the seating portion.

A length l of the locking portion may be 10 to 80% of a length of a short side of the seating portion.

A width w of the locking portion may be 3 to 10% of a length of a long side of the seating portion.

The fixing portion may have a convex shape toward an upper surface side of the upper gasket and a concave shape on an inner side thereof.

A height h1 of the rib may be 10 to 70% of a height h2 of the terminal.

A thickness t1 of the rib may be 0.5 to 1.2 mm.

A secondary battery according to an embodiment of the present disclosure may include an electrode assembly, a current collector, a battery casing, and a cap assembly. The electrode assembly may include an electrode portion and a plurality of electrode tabs formed at one end of the electrode portion. The current collector may be disposed on an upper side of the electrode tabs and welded to the electrode tabs. The battery casing may have an open upper end and accommodate the electrode assembly therein. The cap assembly may be coupled to the upper end of the battery casing. The cap assembly may be provided with a base plate, a gasket, which may be referred to herein to as an upper gasket, and a terminal. The base plate may include a seating portion with a through-hole, which may be referred to herein as an opening, formed in an upper surface thereof. The upper gasket may be disposed in the seating portion of the base plate, and include a lower surface portion in which a through-hole, which may be referred to herein as an opening, is formed, an upper surface portion extending upward from an outer periphery of the lower surface portion, thereby forming a step, and a raised edge, which may be referred to herein to as a rib, formed along an edge of the upper surface portion. The terminal may be disposed on the upper gasket, and may have a central protruding portion, which may be referred to herein (shortened) as a protruding portion, formed in a lower surface thereof and a through-hole, which may be referred to herein as an opening, formed therein.

The seating portion may have a rectangular shape.

A depth d2 of the seating portion may be 20 to 30% of a thickness t2 of the base plate.

An area of the opening of the base plate may be 5 to 15% of an area of the seating portion.

An area of the upper surface portion may be 50 to 80% of an area of the lower surface portion.

A width of the upper surface portion may be 2 to 4 mm.

The lower surface portion may have the same contour as the seating portion.

A height of the (central) protruding portion may be equal to a depth of the lower surface portion.

A secondary battery according to an embodiment of the present disclosure may include an electrode assembly, a current collector, a battery casing, and a cap assembly. The electrode assembly may include an electrode portion and a plurality of electrode tabs formed at one end of the electrode portion. The current collector may be disposed on an upper side of the electrode tabs and welded to the electrode tabs. The battery casing may have an open upper end and accommodate the electrode assembly therein. The cap assembly may be coupled to the upper end of the battery casing. The cap assembly may be provided with a base plate, a gasket, which may be referred to herein to as an upper gasket, and a terminal. The base plate may include a seating portion in which a through-hole, which may be referred to herein as an opening, is formed and at least one protrusion. The upper gasket may be disposed in the seating portion of the base plate, and include a bottom portion in which a through-hole, which may be referred to herein as an opening, is formed, at least one fixing portion disposed on the bottom portion and coupled to the protrusion, and a raised edge, which may be referred to herein to as a rib, formed along an upper edge of the bottom portion. The terminal may be disposed on an upper surface of the upper gasket, and may have at least one recess, which may include a groove, formed in a lower surface thereof and a through-hole, which may be referred to herein as an opening, formed therein.

A depth d3 of the seating portion may be 20 to 30% of a thickness t3 of the base plate.

An area of the opening of the base plate may be 5 to 15% of an area of the seating portion.

The seating portion may have a circular shape.

The seating portion may have a quadrilateral shape.

Two protrusions may be provided and be respectively disposed on one diagonal line of the seating portion.

Four protrusions may be provided and be respectively disposed at corners of the seating portion.

A sum of areas of the plurality of protrusions may be 5 to 10% of an area of the seating portion.

Each of the protrusions may have a shape selected from a group consisting of a cylindrical shape, an elliptical cylindrical shape, and a quadrangular prismatic shape.

The fixing portion may have a convex shape toward an upper surface side of the upper gasket and a concave shape on an inner side thereof.

The protrusions, the fixing portions, and the groves are provided in the same number.

A battery module according to an embodiment of the present disclosure may include the secondary battery.

A battery pack according to an embodiment of the present disclosure may include the battery module.

A transportation means according to an embodiment of the present disclosure may include the battery pack.

### BRIEF DESCRIPTION OF THE DRAWINGS

The above and other objects, features and other advantages of the present disclosure will be more clearly understood from the following detailed description taken in conjunction with the accompanying drawings. Unless indicated otherwise or technically inappropriate, any one, some or all of the features described above with respect to the secondary battery and its components may also apply to the secondary battery or its respective components as described below with reference to the drawings, unless indicated otherwise or technically inappropriate. Repetition of same features are omitted for the sake of conciseness and readability. Any one or some of the features of one example shown in a particular drawing may also be implemented in another example shown in a different drawing, as long as within the scope of the present disclosure and unless indicated explicitly otherwise.
FIG. 1 is a view illustrating a secondary battery according to an example;
FIG. 2 is a view illustrating the secondary battery according to an example;
FIG. 3 is a view illustrating an electrode assembly in which a plurality of first and second electrode tabs are formed on an electrode portion in the secondary battery according to an example;
FIGS. 4A and 4B are views illustrating a first electrode member and a second electrode member in the secondary battery according to an example;
FIGS. 5A and 5B are views illustrating a third electrode member and a fourth electrode member in the secondary battery according to an example;
FIG. 6 is a perspective view of a secondary battery according to an example;
FIG. 7 is a perspective view of an electrode assembly according to an example;
FIG. 8 is a view illustrating a current collector in the secondary battery according to an example;
FIG. 9 is a view illustrating a current collector in the secondary battery according to an example;
FIGS. 10A and 10B are cross-sectional views of cap assemblies according to examples;
FIG. 11 is a view illustrating the cap assembly according to an example;
FIG. 12 is a view illustrating a base plate according to an example;
FIG. 13 is a view illustrating a base plate according to an example;
FIG. 14 is a view illustrating an upper gasket according to an example;
FIG. 15 is a view illustrating a cap assembly according to an example;
FIG. 16A is a view illustrating a cap assembly according to an example;
FIG. 16B is a view illustrating a cap assembly according to an example;
FIG. 17 is a view illustrating a cap assembly according to an example;
FIG. 18A and 18B are cross-sectional views of cap assemblies according to examples;
FIG. 19 is a view illustrating a cap assembly according to an example;
FIG. 20 is a view illustrating a cap assembly according to an example;
FIG. 21A and 21B are cross-sectional views of cap assemblies according to examples;
FIG. 22 is a view illustrating a cap assembly according to an example;
FIG. 23 is a view illustrating a cap assembly according to an example;
FIG. 24 is a view illustrating a cap assembly according to an example;
FIG. 25 is a view illustrating a cap assembly according to an example;
FIG. 26A and 26B are cross-sectional views of cap assemblies according to examples;
FIG. 27 is a perspective view illustrating a secondary battery according to an example;
FIG. 28 is a perspective exploded view illustrating cap assembly according to an example;
FIG. 29A and 29B are cross-sectional views of cap assemblies according to examples;
FIG. 30 is a flowchart illustrating a method of manufacturing a secondary battery according to an example;
FIG. 31 is a view illustrating a state in which a plurality of first electrode tabs and a plurality of second electrode tabs are respectively grouped in a secondary battery according to an example;
FIG. 32 is a view illustrating a state in which a current collector is disposed between a plurality of first electrode tabs and a plurality of second electrode tabs in a secondary battery according to an example;
FIG. 33 is a view illustrating a state in which a current collector and first and second electrode tabs are welded in a secondary battery according to an example; and
FIG. 34 is a view illustrating a state in which a cap assembly is coupled to an electrode assembly in a secondary battery according to an example.
FIG. 35 is a cross-sectional view illustrating a cap assembly in the secondary battery according to an example.

### DETAILED DESCRIPTION

Since the present disclosure may be modified in various forms and may have various embodiments, particular embodiments will be illustrated in the accompanying drawings and described in detail with reference to the drawings. However, this is not intended to limit the present disclosure to particular modes of practice, and it is to be appreciated that all changes, equivalents, and substitutes that do not depart from the spirit and technical scope of the present disclosure are encompassed in the present disclosure.

The terminology used herein is for the purpose of describing particular embodiments only and is not intended to be limiting the present disclosure. In the present disclosure, the singular forms are intended to include the plural forms as well, unless the context clearly indicates otherwise. It will be further understood that the terms "comprise", "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, preferred embodiments of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

Herein, the terms upper surface and lower surface may be used interchangeably with the first surface and the second surface as described above, respectively, for ease of reference to the drawings, particularly in terms of orientation with reference to the drawings.

Hereinafter, a secondary battery according to an embodiment of the present disclosure will be described.

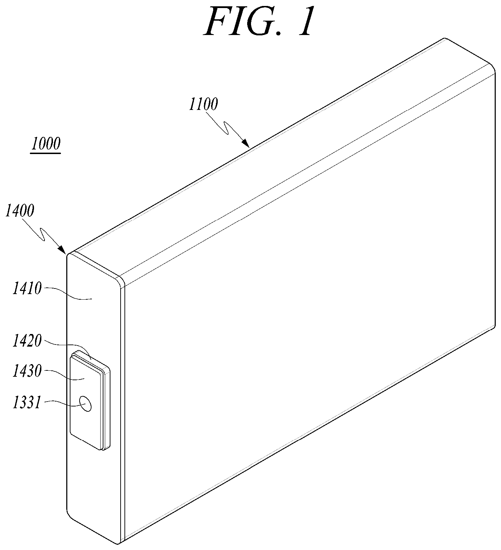

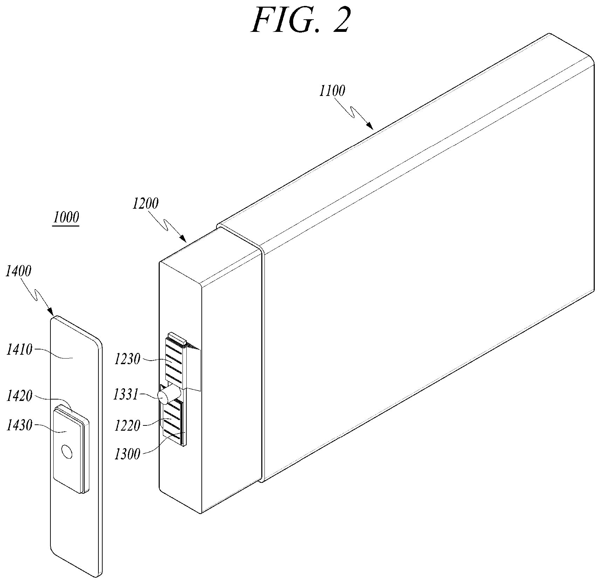

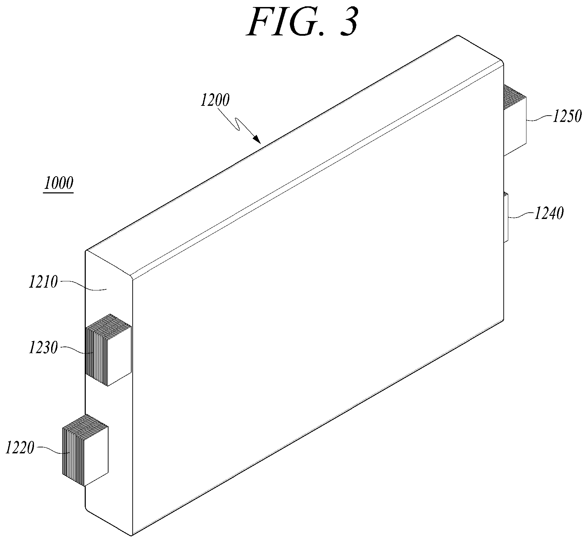

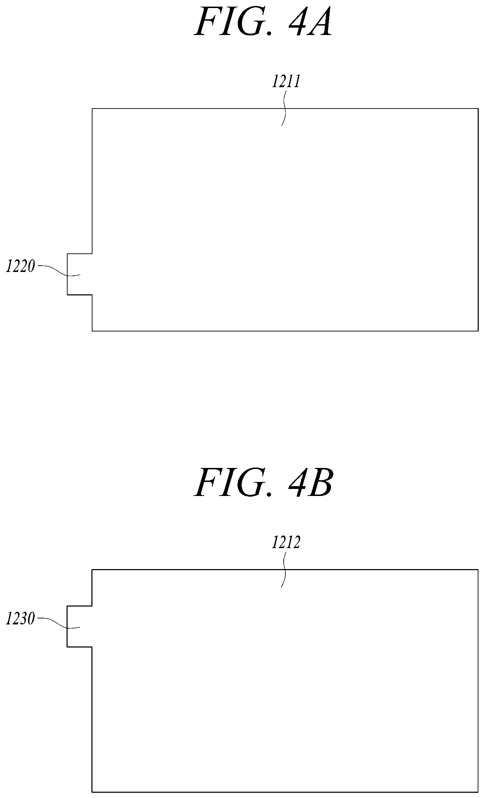

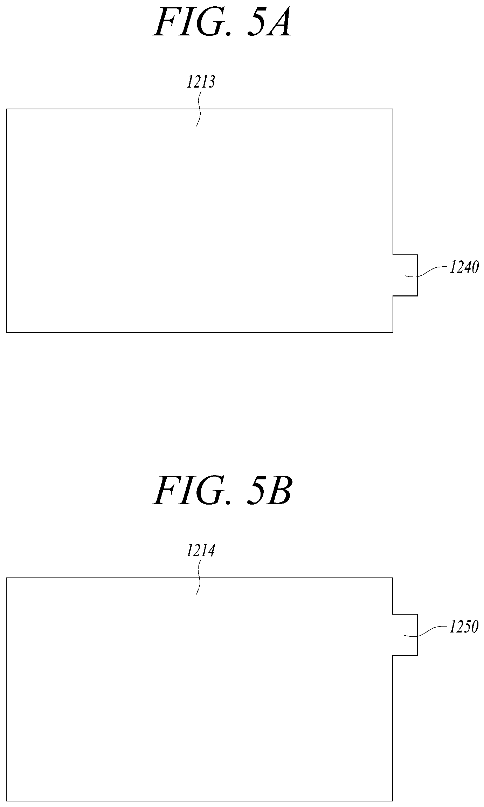

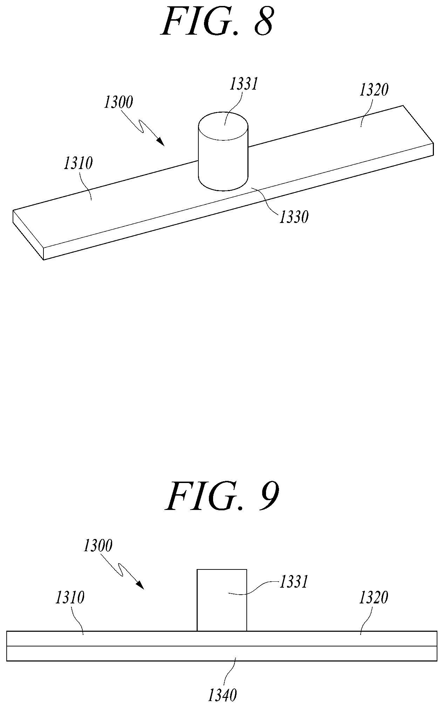

FIG. 1 is a view illustrating a secondary battery according to an example, and FIG. 2 is a view illustrating the secondary battery according to an example. FIG. 3 is a view illustrating an electrode assembly in which a plurality of first and second electrode tabs are formed on an electrode portion in the secondary battery according to an example, FIGS. 4A and 4B are views illustrating a first electrode member and a second electrode member in the secondary battery according to an example, and FIGS. 5A and 5B are views illustrating a third electrode member and a fourth electrode member in the secondary battery according to an example. FIGS. 8 and 9 are views illustrating a current collector in the secondary battery according to an example.

As shown in FIGS. 1 and 2, a secondary battery 1000 according to an example includes a battery casing, which may be referred to herein as a casing 1100, an electrode assembly 1200, a current collector 1300, and a cap assembly 1400.

The casing 1100 forms an exterior of the secondary battery 1000. The casing 1100 has an internal space configured to accommodate the electrode assembly 1200, with a through-hole, which may be referred to herein as an opening, being formed on one surface thereof. In this embodiment, the casing 1100 has a rectangular parallelepiped shape, but the shape of the casing 1100 may be variously changed without being limited thereto. The casing 1100 may be made of a rigid material that may protect the electrode assembly 1200 accommodated therein. For example, the casing 1100 may be made of a metal such as aluminum or stainless steel.

An electrolyte may be accommodated in the casing 1100 together with the electrode assembly 1200. The electrolyte may be composed of a lithium salt such as LiPF6 or LiBF4 in an organic solvent such as EC, PC, DEC, EMC, or DMC. The electrolyte may be in a liquid, solid, or gel state.

The electrode assembly 1200 is accommodated in the casing 1100. As illustrated in FIG. 3, the electrode assembly 1200 includes an electrode portion 1210, a plurality of first electrode tabs 1220, and a plurality of second electrode tabs 1230. The plurality of first electrode tabs 1220 and the plurality of second electrode tabs 1230 are disposed on one end of the electrode portion 1210. The plurality of first electrode tabs 1220 are aligned with each other, and the plurality of second electrode tabs 1230 are aligned with each other. The aligned plurality of first electrode tabs 1220 and the aligned plurality of second electrode tabs 1230 are arranged so as not to overlap each other in a width direction and a length direction of the electrode assembly 1200.

Specifically, the electrode portion 1210 includes a plurality of first electrode members 1211, a plurality of second electrode members 1212, a plurality of third electrode members 1213, a plurality of fourth electrode members 1214, and a separator.

An active material may be applied to the plurality of first electrode members 1211, the plurality of second electrode members 1212, the plurality of third electrode members 1213, and the plurality of fourth electrode members 1214. In the plurality of first electrode members 1211 and the plurality of second electrode members 1212, an active material such as a transition metal oxide may be applied to a metal plate such as aluminum. The plurality of first electrode members 1211 and the plurality of second electrode members 1212 may have the same polarity and may be positive electrode plates. In the plurality of third electrode members 1213 and the plurality of fourth electrode members 1214, an active material such as graphite or carbon may be applied to a metal plate such as copper or nickel. The plurality of third electrode members 1213 and the plurality of fourth electrode members 1214 may have the same polarity and may be negative electrode plates.

The separator is positioned between the plurality of first to fourth electrode members 1211, 1212, 1213, and 1214 to prevent a short circuit between the plurality of first to fourth electrode members 1211, 1212, 1213, and 1214. The separator may be made of polyethylene, polypropylene, or a composite thereof.

The electrode portion 1210 may be formed by disposing the separator between the first electrode member 1211 and the third electrode member 1213 that are sequentially arranged, and between the second electrode member 1212 and the fourth electrode member 1214 that are sequentially arranged. That is, in one embodiment, the electrode portion 1210 is formed such that one side of the electrode portion 1210 is formed by stacking, tens to hundreds of times, the first electrode member 1211, the separator, the third electrode member 1213, and the separator in this order, and the other side of the electrode portion 1210 is formed by stacking, tens to hundreds of times, the second electrode member 1212, the separator, the fourth electrode member 1214, and the separator in this order. In another embodiment, the electrode portion 1210 may be formed by stacking, in this order, the first electrode member 1211, the separator, the third electrode member 1213, the separator, the second electrode member 1212, the separator, the fourth electrode member 1214, and the separator, and then winding the stacked structure.

In this embodiment, the electrode assembly 1200 includes one electrode portion 1210, but in another embodiment, the electrode assembly 1200 may include a plurality of electrode portions 1210. The plurality of electrode portions 1210 may be electrically connected to each other.

Electrode tabs 1220, 1230, 1240, and 1250 to which no active material is applied are formed on one ends of the plurality of first to fourth electrode members 1211, 1212, 1213, and 1214. In one embodiment, the electrode members 1211, 1212, 1213, and 1214 and the electrode tabs 1220, 1230, 1240, and 1250 may be integrally formed by cutting a predetermined portion from a single metal plate using a laser or the like so as to leave the electrode members 1211, 1212, 1213, and 1214 and the electrode tabs 1220, 1230, 1240, and 1250. The plurality of electrode tabs 1220, 1230, 1240, and 1250 may be formed in a direction toward the cap assembly 1400.

The first electrode tab 1220 is formed at a first position of the first electrode member 1211. The second electrode tab 1230 is formed at a second position of the second electrode member 1212 (FIGS. 4A and 4B). Similarly, the third electrode tab 1240 may be formed at a third position of the third electrode member 1213, and the fourth electrode tab 1250 may be formed at a fourth position of the fourth electrode member 1214 (FIGS. 5A and 5B).

The plurality of first electrode members 1211 and the plurality of third electrode members 1213 may be alternately stacked with the separator interposed therebetween. A stack of the plurality of first electrode members 1211 and the plurality of third electrode members 1213 forms one half of the electrode portion 1210.

The plurality of second electrode members 1212 and the plurality of fourth electrode members 1214 may be alternately stacked with the separator interposed therebetween. A stack of the plurality of second electrode members 1212 and the plurality of fourth electrode members 1214 forms the remaining half of the electrode portion 1210.

The stack of the plurality of first electrode members 1211 and the plurality of third electrode members 1213 and the stack of the plurality of second electrode members 1212 and the plurality of fourth electrode members 1214 are connected in a width direction of the electrode portion 1210. In forming the electrode assembly 1200, the plurality of first electrode members 1211 and the plurality of third electrode members 1213 may be stacked, and then the plurality of second electrode members 1212 and the plurality of fourth electrode members 1214 may be stacked.

When the plurality of first to fourth electrode members 1211, 1212, 1213, and 1214 are stacked, the plurality of first electrode tabs 1220 overlap each other at the first position. The plurality of second electrode tabs 1230 overlap each other at the second position. That is, the plurality of first electrode tabs 1220 are grouped at the first position, and the plurality of second electrode tabs 1230 are grouped at the second position. The first position and the second position may be spaced apart from each other on the electrode members, and the grouped plurality of first electrode tabs 1220 and the grouped plurality of second electrode tabs 1230 may be spaced apart from each other in the width direction and the length direction of the electrode assembly 1200.

The grouped plurality of first electrode tabs 1220 are primarily welded to each other, and the grouped plurality of second electrode tabs 1230 are primarily welded to each other.

The plurality of first electrode tabs 1220 and the plurality of second electrode tabs 1230 are electrode tabs having the same polarity. In order to stably weld a large number of electrode tabs, the electrode tabs are spaced apart from each other in the width direction and the length direction of the electrode assembly 1200 and primarily welded, and then are secondarily welded onto the current collector. That is, one electrode tab is formed on one electrode member. However, by forming the electrode tabs at different positions on the respective electrode members, two electrode tab groups having different positions on the same polarity are formed after stacking of the electrode members. In another embodiment, two or more electrode tabs having different positions on the same polarity may be formed.

When the plurality of first to fourth electrode members 1211, 1212, 1213, and 1214 are stacked, the plurality of third electrode tabs 1240 overlap each other at the third position, and the plurality of fourth electrode tabs 1250 overlap each other at the fourth position. That is, the plurality of third electrode tabs 1240 are grouped at the third position, and the plurality of fourth electrode tabs 1250 are grouped at the fourth position. The third position and the fourth position are spaced apart from each other on the electrode members, and the grouped plurality of third electrode tabs 1240 and the grouped plurality of fourth electrode tabs 1250 may be spaced apart from each other in the width direction and the length direction of the electrode assembly 1200.

The plurality of third electrode tabs 1240 and the plurality of fourth electrode tabs 1250 are electrode tabs having the same polarity.

The plurality of electrode tabs 1220, 1230, 1240, and 1250 overlapped at respective positions may be connected to each other by ultrasonic welding, laser welding, or the like so as to facilitate current flow.

In the present embodiment, a plurality of electrode tabs having the same polarity are respectively formed at both ends of the electrode assembly; however, the present disclosure is not limited thereto, and in a modified example, a plurality of electrode tabs having different polarities may be formed at one end of the electrode assembly so as to be spaced apart from each other.

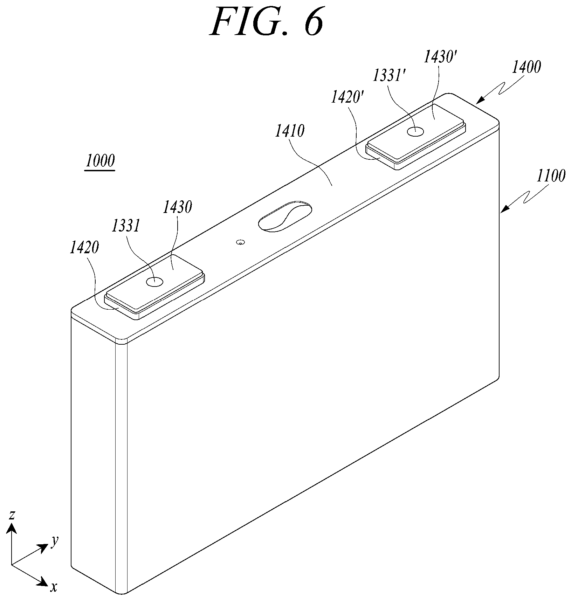

As shown in FIG. 6, in a secondary battery 1000 according to a modified example of the present disclosure, two terminals may be arranged at one end. In the present embodiment, the casing 1100 may have an internal space configured to accommodate the electrode assembly 1200, and an opening may be formed at one end thereof.

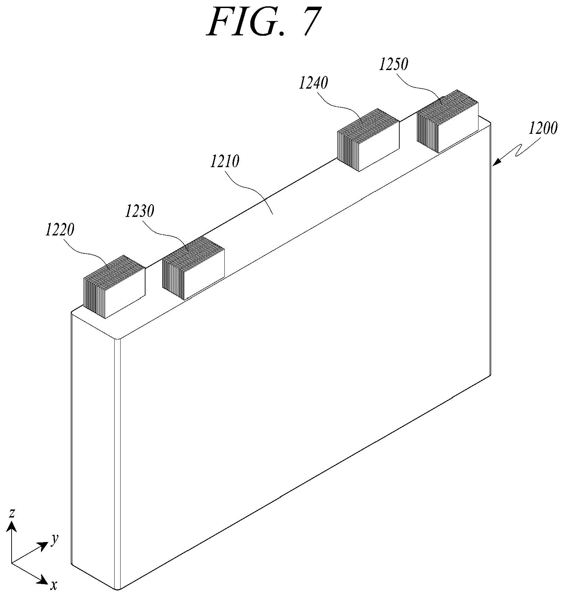

The electrode assembly 1200 may be accommodated in the casing 1100. As shown in FIG. 7, the electrode assembly 1200 may include an electrode portion 1210, a plurality of first electrode tabs 1220, a plurality of second electrode tabs 1230, a plurality of third electrode tabs 1240, and a plurality of fourth electrode tabs 1250. The plurality of first electrode tabs 1220, the plurality of second electrode tabs 1230, the plurality of third electrode tabs 1240, and the plurality of fourth electrode tabs 1250 may be arranged at one end of the electrode portion 1210.

At one side of the one end of the electrode assembly 1200, the plurality of first electrode tabs 1220 may be aligned with one another, and the plurality of second electrode tabs 1230 may be aligned with one another. At the other side of the one end of the electrode assembly 1200, the plurality of third electrode tabs 1240 may be aligned with one another, and the plurality of fourth electrode tabs 1250 may be aligned with one another. The aligned plurality of first electrode tabs 1220, plurality of second electrode tabs 1230, plurality of third electrode tabs 1240, and plurality of fourth electrode tabs 1250 may be arranged so as not to overlap each other in a width direction (x-direction) and a length direction (y-direction) of the electrode assembly 1200.

The grouped plurality of first electrode tabs 1220 may be primarily welded to each other, the plurality of second electrode tabs 1230 may be primarily welded to each other, the plurality of third electrode tabs 1240 may be primarily welded to each other, and the plurality of fourth electrode tabs 1250 may be primarily welded to each other.

The plurality of first electrode tabs 1220 and the plurality of second electrode tabs 1230 are electrode tabs having the same polarity, and in order to stably weld a large number of electrode tabs, the plurality of first electrode tabs 1220 and the plurality of second electrode tabs 1230 may first be primarily welded while being spaced apart from each other in the width direction and the length direction of the electrode assembly 1200, and then secondarily welded on a first current collector. Likewise, the plurality of third electrode tabs 1240 and the plurality of fourth electrode tabs 1250 are electrode tabs having the same polarity, and may first be primarily welded while being spaced apart from each other in the width direction and the length direction of the electrode assembly 1200, and then secondarily welded on a second current collector. That is, one electrode tab is formed on one electrode member, but by varying the positions at which the electrode tabs are formed on the respective electrode members, two electrode tab groups having the same polarity may be formed at different positions after stacking of the electrode members.

The plurality of first and second electrode tabs 1220 and 1230 and the plurality of third and fourth electrode tabs 1240 and 1250 may have different polarities from each other.

As illustrated in FIG. 8, the current collector 1300 includes a first current collecting portion 1310, a second current collecting portion 1320, and a connecting portion 1330.

The current collector 1300 may have a rectangular shape extending in the length direction of the electrode assembly 1200. The current collector 1300 may have the first current collecting portion 1310, the connecting portion 1330, and the second current collecting portion 1320 sequentially arranged in the length direction of the rectangular shape.

The first current collecting portion 1310 is welded to the plurality of first electrode tabs 1220. The plurality of first electrode tabs 1220 may be bent onto the first current collecting portion 1310 and welded thereto. The second current collecting portion 1320 is welded to the plurality of second electrode tabs 1230. The plurality of second electrode tabs 1230 may be bent onto the second current collecting portion 1320 and welded thereto.

The connecting portion 1330 is disposed between the first current collecting portion 1310 and the second current collecting portion 1320. The first current collecting portion 1310 and the second current collecting portion 1320 are respectively connected to opposite sides of the connecting portion 1330. Since the first current collecting portion 1310 and the second current collecting portion 1320 are spaced apart from each other by the connecting portion 1330, the plurality of first electrode tabs 1220 and the plurality of second electrode tabs 1230 do not interfere with each other when being welded to the first current collecting portion 1310 and the second current collecting portion 1320, respectively.

Two current collectors 1300 may be provided, and materials of the current collectors 1300 may be the same as those of the first and second electrode tabs 1220 and 1230 or the third and fourth electrode tabs 1240 and 1250. That is, the current collector 1300 may be formed of aluminum, or may be formed of copper or nickel.

A current collecting protrusion 1331 is provided on the connecting portion 1330. The current collecting protrusion 1331 is electrically connected to an electrode terminal. A material of the current collecting protrusion 1331 may be the same as or different from a material of the connecting portion 1330. For example, both the connecting portion 1330 and the current collecting protrusion 1331 may be formed of aluminum. Alternatively, the connecting portion 1330 may be formed of copper, and the current collecting protrusion 1331 may be formed of aluminum. When the material of the current collecting protrusion 1331 is the same as the material of the connecting portion 1330, the connecting portion 1330 and the current collecting protrusion 1331 may be integrally formed.

The current collector 1300 may have a thickness of 0.5 to 3.0 mm. In the present disclosure, the current collector 1300 is positioned on the electrode portion, and the electrode tabs 1220 and 1230 are positioned on the current collector 1300 and welded from upper sides thereof, thereby securing the thickness of the current collector 1300. Thus, durability of the secondary battery may also be improved.

A width of the current collector 1300 may be 0.5 to 0.8 times a width of the electrode assembly 1200.

According to the present disclosure, since the electrode tabs are positioned on the current collector 1300 and welding is performed from the upper sides of the electrode tabs, there is no risk of damaging the separator provided in the electrode portion.

In the related art, welding is performed after disposing the current collector on the upper sides of the electrode tabs, and thus a high laser output is required to deliver heat to the electrode tabs located under the current collector. However, according to the present disclosure, since the electrode tabs are disposed on the upper side of the current collector, welding may be performed with a lower output. Further, since it is not necessary to melt a lower portion of the current collector, a thickness of the current collector may be increased to protect the separator, and thereby, durability of the secondary battery may also be improved.

As illustrated in FIG. 9, an insulator 1340 may be disposed under the current collector 1300. The insulator 1340 may be an insulating plate or an insulating film. The electrode tabs 1220 and 1230 and the electrode portion 1210 may be further protected by the insulator 1340.

The cap assembly 1400 seals an opening of the casing 1100 in which the electrode assembly 1200 is accommodated. The cap assembly 1400 includes a base plate 1410, a gasket, which may be referred to herein to as an upper gasket 1420, a terminal 1430, an annular gasket 1440 and a pin, which may be referred to as a rivet 1450. An insulating member (not shown) may also be coupled to a lower end of the cap assembly.

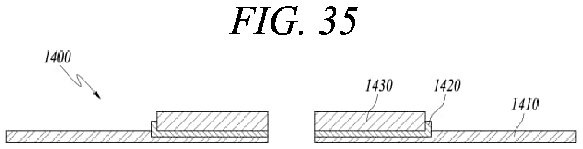

Generally, as shown in FIG. 35, the cap assembly 1400 has a base plate 1410, a gasket 1420 and a terminal 1430 that are arranged upon each other in said order. The base plate 1410 may have a seating portion that is provided as a recessed area or a depressed area corresponding to the size and shape of the gasket 1420. The gasket 1420 may be seated in and/or on the seating portion of the base plate 1410. The terminal may be arranged on the gasket 1420. A first surface of the base plate 1410 which faces away from the electrode assembly of the secondary battery (not shown in FIG. 35) may be one that faces upward in FIG. 35, thereby being referred to as an upper surface. The second surface of the base plate 1410 that is opposite the first surface thereof may be one that faces downward in FIG. 35, thereby being referred to as a lower surface. Herein, the terms upper surface and lower surface may be used interchangeably with the first surface and the second surface, respectively, for ease of reference to the drawings. The same may apply analogously to first and second surfaces of the gasket 1420 and the terminal 1430.

The base plate 1410 may have a plate shape that covers the opening of the casing 1100. The base plate 1410 may have a shape corresponding to the shape of the opening of the casing 1100. The base plate 1410 may be formed of the same material as the casing 1100 and may be fixed over the opening of the casing 1100 by a method such as laser welding. A through-hole, which may be referred to herein as an opening, may be formed in the base plate 1410. The radius of curvature of a corner of the base plate 1410 may be 1.6 mm to 1.8 mm.

Meanwhile, a vent hole (not shown) and an electrolyte injection port (not shown) may be formed in the base plate 1410. The vent hole is opened when the internal pressure of the casing 1100 exceeds a reference value. In the present embodiment, the vent hole may be formed in the base plate 1410 or may be formed in the casing 1100. Electrolyte may be injected into the interior of the casing 1100 through the electrolyte injection port.

The gasket 1420 is coupled to an upper surface of the base plate 1410. A lower surface of the gasket 1420 has a shape corresponding to the upper surface of the base plate 1410. The gasket 1420 is an insulating material and may be formed of, for example, a highly elastic polymer resin. A rib may be formed at an edge of the gasket 1420. A through-hole, which may be referred to herein as an opening, may be formed in the gasket 1420.

The terminal 1430 is coupled on the gasket 1420. A lower surface of the terminal 1430 has a shape corresponding to the upper surface of the gasket 1420. The terminal 1430 is electrically connected to the electrode tabs 1220, 1230, 1240, and 1250 through the current collector 1300. The terminal 1430 may have a circular or rectangular plate shape. The terminal 1430 may be formed of the same material as the casing 1100 and may be a metal such as aluminum or stainless steel. A through-hole, which may be referred to herein as an opening, may be formed in the terminal 1430.

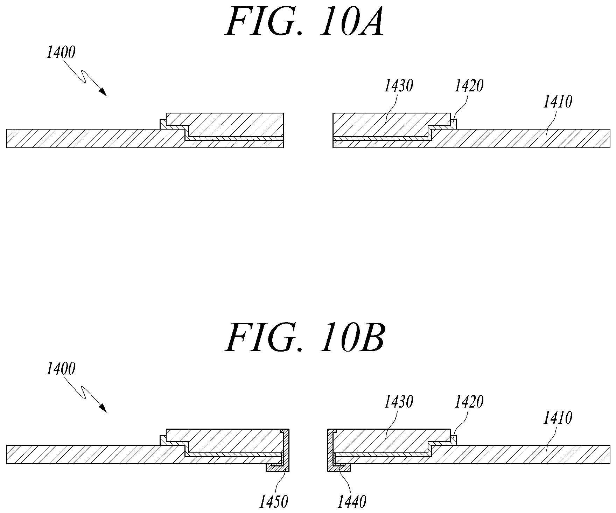

When the base plate 1410, the gasket 1420, and the terminal 1430 are sequentially coupled, the openings of the base plate 1410, the gasket 1420, and the terminal 1430 may be aligned (FIG. 10A). A current collecting protrusion 1331 of the current collector 1300 may be inserted into the aligned openings. Accordingly, the cap assembly 1400 may be electrically connected to the electrode assembly 1200 by the current collector 1300.

In a modified example, the annular gasket 1440 may be inserted through the aligned openings. An upper portion of the annular gasket 1440 may contact the gasket 1420.

A rivet 1450 may be inserted into the opening of the annular gasket 1440 and caulked (FIG. 10B). When the rivet 1450 fixes the base plate 1410, the gasket 1420, and the terminal 1430, the current collecting protrusion 1331 of the current collector 1300 may be inserted into the rivet 1450. After the current collecting protrusion 1331 is inserted into the opening 1435, an outer circumferential surface of an end of the current collecting protrusion 1331 and an inner circumferential surface of the opening 1435 of the terminal 1430 may be welded.

Accordingly, the cap assembly 1400 may be electrically connected to the electrode assembly 1200 by the current collector 1300.

The base plate 1410, the gasket 1420, and the terminal 1430 may have various shapes and may be coupled by various coupling structures.

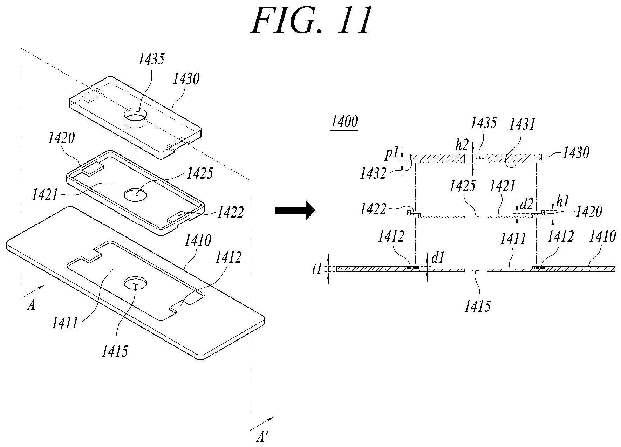

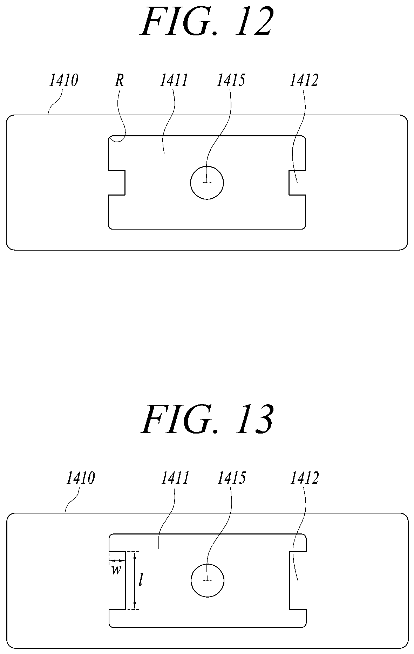

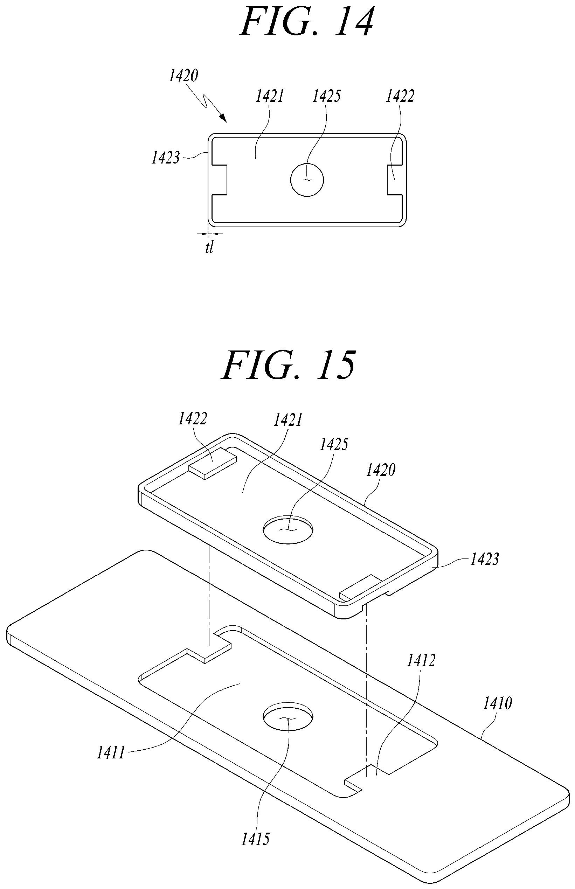

FIG. 11 is a view illustrating the cap assembly according to an example. FIG. 12 is a view illustrating a base plate according to an example, FIG. 13 is a view illustrating a base plate according to an example, and FIG. 14 is a view illustrating an upper gasket according to an example.

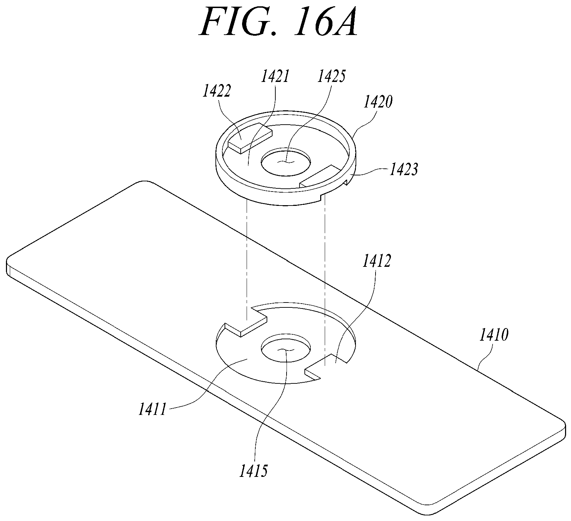

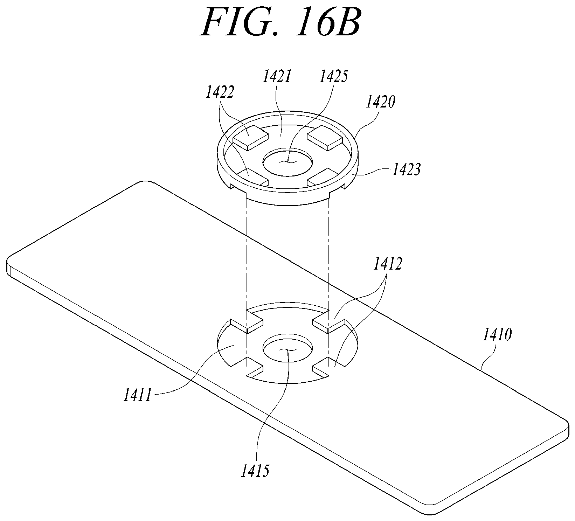

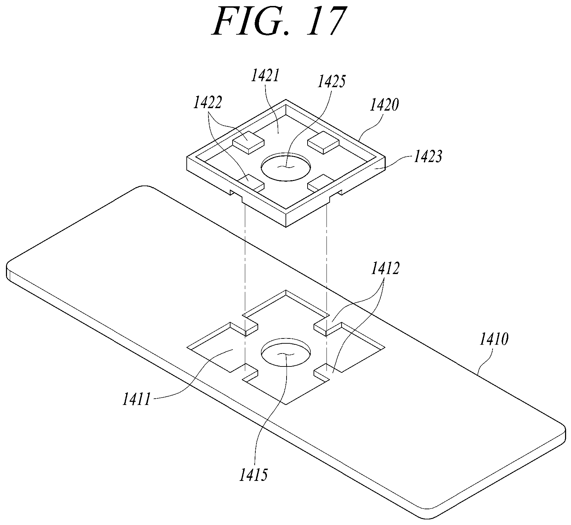

FIG. 15 is a view illustrating a cap assembly according to an example, FIG. 16A and 16B are views illustrating a cap assembly according to further examples, and FIG. 17 is a view illustrating a cap assembly according to an example.

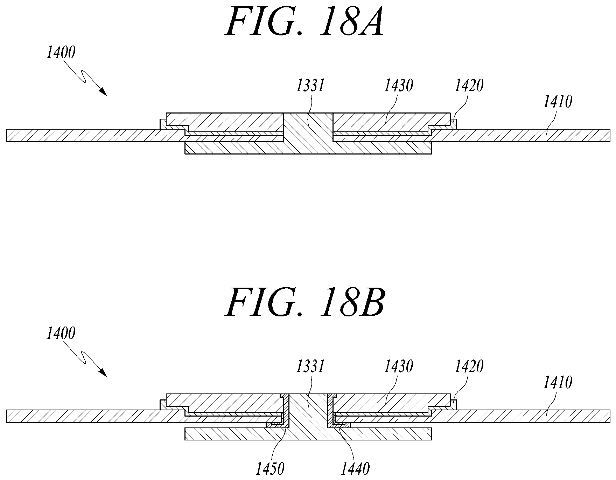

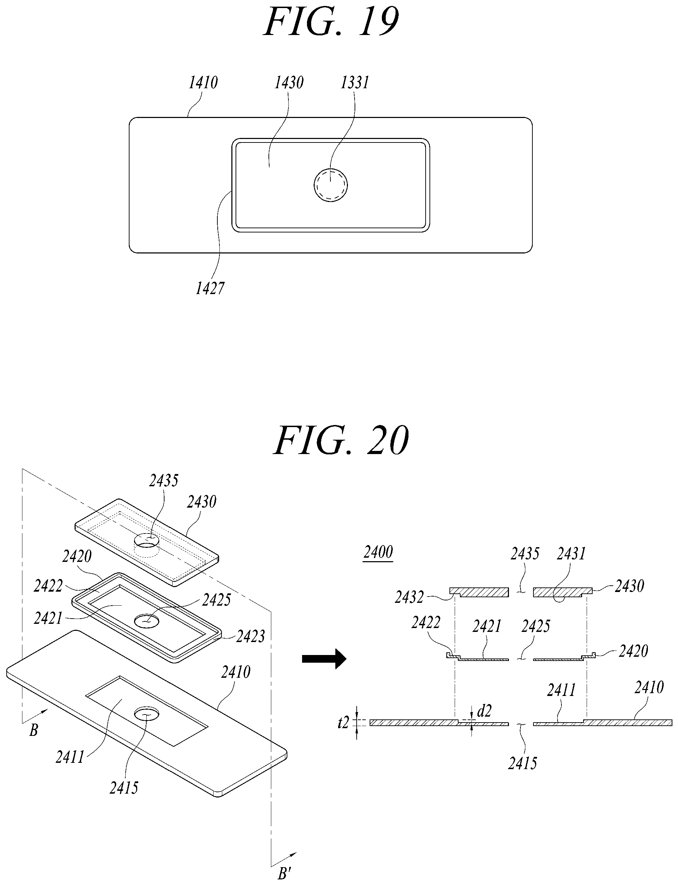

FIGS. 18A and 18B are cross-sectional views of a cap assembly according to examples. FIG. 19 is a view of a base plate and a gasket according to an example.

The cap assembly 1400 includes a base plate 1410, a gasket, which may be referred to herein to as an upper gasket 1420, a terminal 1430, an annular gasket 1440 and a pin referred to as a rivet 1450.

The base plate 1410 may have a plate shape that covers an opening of the casing 1100. The radius of curvature of a corner of the base plate 1410 may be 1.6 mm to 1.8 mm. The base plate 1410 may have a shape corresponding to a shape of the opening of the casing 1100. The base plate 1410 may be formed of the same material as the casing 1100 and may be fixed on the opening of the casing 1100 by a method such as laser welding.

The base plate 1410 may include a seating portion 1411 and a locking portion 1412. The seating portion 1411 forms a flat surface recessed downward from an upper surface of the base plate 1410. The seating portion 1411 may have a quadrilateral shape or a circular shape. A lower surface of the seating portion 1411 is in contact with a lower surface of the upper gasket 1420. Referring to FIG. 12, a depth d1 of the seating portion 1411 may be 30% to 50%, and particularly 40% of a thickness t1 of the base plate 1410. When the depth d1 of the seating portion 1411 is smaller than 30% of the thickness t1 of the base plate 1410, strength of the base plate 1410 may be weakened.

When the seating portion 1411 has a quadrangular shape, the radius of curvature of a corner of the seating portion 1411 may be 2 mm to 3 mm, preferably 2.5 mm. In order to increase a coefficient of friction of a surface of the seating portion 1411, silicone or the like may be applied to the surface of the seating portion 1411, or a surface roughness may be increased by surface treatment.

The area of one seating portion 1411 relative to the base plate 1410 may be 8% to 20%, preferably 11% to 14%. In the present embodiment, one seating portion 1411 is formed on the base plate 1410. However, when two seating portions are formed on the base plate 1410, a sum of areas of the two seating portions may be 8% to 20%, preferably 11% to 14%, relative to an area of the base plate 1410.

An opening 1415 is formed at a center of the seating portion 1411. During assembly of the cap assembly 1400, the current collecting protrusion 1331 of the current collector 1300 is introduced through the opening 1415. An area of the opening 1415 may be 5% to 20% of an area of the seating portion 1411. By sufficiently securing a diameter of the current collecting protrusion 1331 introduced through the opening 1415, internal resistance may be reduced when electricity generated in the secondary battery is output, and thereby, heat generation may be reduced.

The locking portion 1412 may be disposed on one side or the other side, or on both sides, of the seating portion 1411. The locking portion 1412 is formed by extending an upper surface of the base plate 1410 toward the seating portion 1411. The locking portion 1412 may have a quadrilateral shape or a semicircular shape. The locking portion 1412 forms a step with respect to the lower surface of the seating portion 1411.

The shape of the seating portion 1411 and the shape and the number of the locking portions 1412 may be selected as needed. For example, as illustrated in FIG. 13, the seating portion 1411 may have a rectangular shape. The locking portion 1412 may have, for example, a quadrilateral shape, and two locking portions 1412 may be disposed respectively on short sides of the seating portion 1411.

A sum of areas of two locking portions 1412 may be 1 to 10%, preferably 2.25% of an area of the seating portion 1411. The upper gasket 1420 and the terminal 1430 are sequentially stacked on the seating portion 1411 of the base plate 1410. When a total area of the locking portions 1412 exceeds 10%, an area of a lower surface of the terminal 1430 may be reduced, thereby increasing internal resistance. When the total area of the locking portions 1412 is less than 1%, an effect of preventing rotation of components may be reduced, which is undesirable.

The area of the locking portion 1412 refers to a cross-sectional area of the locking portion 1412 in a horizontal direction, that is, in a direction parallel to an upper surface of the base plate 1410.

A total area (S, mm²) of the locking portion 1412 may be determined by Equation 1:
[Equation 1] $S = 1 / 2 ⋅ AB / C ⋅ N 2$
where A is a length of the base plate (mm), B is an area of the opening relative to an area of the seating portion, C is a thickness of the base plate (mm), and N is the number of locking portions.

When the length of the base plate 1410 is long or the thickness of the base plate 1410 is small, the area of the locking portion 1412 may be increased so as to increase a boundary area contacting the gasket 1420 in a vertical direction. When the area of the opening 1415 relative to the area of the seating portion 1411 is large, it may be difficult to secure a sufficient area of the seating portion in contact with the gasket 1420, and thus the area of the locking portion 1412 may be increased to prevent rotation of the gasket 1420.

Meanwhile, referring to FIG. 13, a length l of the locking portion 1412 may be 10 to 80%, preferably 20% of a length of the short side of the seating portion 1411. When the length l of the locking portion 1412 exceeds 80% of the length of the short side of the seating portion 1411, a distance between the locking portion 1412 and a long side of the seating portion 1411 may be reduced, thereby making it difficult for the upper gasket 1420 to be smoothly seated. When the length l of the locking portion 1412 is less than 10% of the length of the short side of the seating portion 1411, an effect of preventing rotation of components may be reduced.

A width w of the locking portion 1412 may be 3 to 10%, preferably 5% of a length of the long side of the seating portion 1411. When the width w of the locking portion 1412 exceeds 10% of the length of the long side of the seating portion 1411, an area of the lower surface of the terminal 1430 may be reduced, thereby increasing internal resistance.

The upper gasket 1420 is seated on the seating portion 1411 of the base plate 1410. As illustrated in FIG. 15, the upper gasket 1420 may include a bottom portion 1421, at least one fixing portion 1422, and a raised edge, which may be referred to herein to as a rib 1423. The bottom portion 1421 is a flat surface and has a contour identical to that of the seating portion 1411 of the base plate 1410. A lower surface of the bottom portion 1421 may be configured to have the same shape and size as the lower surface of the seating portion 1411 so as to correspond to the shape of the lower surface of the seating portion 1411. A difference between a size of a long side of the seating portion 1411 and a size of a long side of the bottom portion 1421 may be 0.05 mm or less.

At least one fixing portion 1422 is provided on at least one side of the bottom portion 1421. The fixing portion 1422 is coupled to the locking portion 1412 of the base plate 1410. In order to be coupled to the locking portion 1412 protruding from the seating portion 1411, the fixing portion 1422 has a concave space formed on an inner side thereof and has a convex shape toward an upper side. The fixing portion 1422 may be formed in the same number as the locking portion 1412 and may have the same shape as the locking portion 1412. A depth d2 of the concave space inside the fixing portion 1422 may be equal to or greater than the depth d1 of the seating portion 1411.

An opening 1425 is formed at a center of the bottom portion 1421. During assembly of the cap assembly 1400 and the electrode assembly, the current collecting protrusion 1331 of the current collector 1300 is introduced through the opening 1425.

The rib 1423 is formed along an upper edge of the bottom portion 1421. The rib 1423 is in close contact with a sidewall of the seating portion 1411 to seal the base plate 1410. The upper gasket 1420 has a container shape defined by the rib 1423 and the bottom portion 1421, and is configured to seat the terminal 1430. The rib 1423 is formed upward from the bottom portion 1421 and has a height h1 greater than the depth d1 of the seating portion 1411. In addition, the height h1 of the rib 1423 may be 30% to 80%, preferably 50% of a terminal height h2. When the height h1 of the rib 1423 is less than 10% of the terminal height h2, it may be difficult to stably seal the terminal 1430.

A thickness tl of the rib 1423 may be 0.5 to 1.2 mm. When the thickness tl of the rib 1423 is thinner than 0.5mm, a sealing effect may be reduced.

The upper gasket 1420 may be made of an insulating material. The terminal 1430 and the base plate 1410 are insulated from each other by the upper gasket 1420.

Meanwhile, as illustrated in FIG. 15, two locking portions 1412 may be provided. The two rectangular locking portions 1412 may be disposed at symmetric positions with respect to the opening 1415 on one edge and the other edge of the seating portion 1411. When the locking portions 1412 are formed at symmetric positions, there is an advantage in that, during assembly of the components, it is not necessary to separately align directions of components, thereby facilitating assembly.

In another embodiment, the seating portion 1411 may have a circular shape, and two rectangular locking portions 1412 may be respectively disposed on both sides of the seating portion 1411 (FIG. 16A). Four rectangular locking portions 1412 may be respectively arranged at equal angular intervals around a periphery of the seating portion 1411 (FIG. 16B). In this casing, a width w of the locking portion 1412 may be 3% to 15%, preferably 13%, of a length of a long side of the seating portion 1411.

In another modified example, the seating portion 1411 may have a square shape, and four rectangular locking portions 1412 may be respectively arranged at centers of four sides of the seating portion 1411 (FIG. 17).

Meanwhile, a vent hole (not shown) and an electrolyte injection hole (not shown) may be formed in the base plate 1410. The vent hole is opened when an internal pressure of the casing 1100 exceeds a reference value. In this embodiment, the vent hole may be formed in the base plate 1410 or may be formed in the casing 1100. An electrolyte may be injected into the casing 1100 through the electrolyte injection hole. The terminal 1430 is coupled on the upper gasket 1420. At least one recess, which may be referred to as a groove 1432, is formed on a lower surface of the terminal 1430. The groove 1432 is coupled to the fixing portion 1422 of the upper gasket 1420. An inner side of the groove 1432 is in contact with an upper surface of the fixing portion 1422.

The cap assembly 1400 is assembled by coupling the locking portion 1412 of the base plate 1410 with the lower surface of the fixing portion 1422 of the upper gasket 1420, and by coupling the upper surface of the fixing portion 1422 of the upper gasket 1420 with the groove 1432 of the terminal 1430.

The terminal 1430 is electrically connected to the electrode tabs 1220, 1230, 1240, and 1250 through the current collector 1300. The terminal 1430 may have a plate shape with a circular shape or a quadrilateral shape. The terminal 1430 may be made of the same material as the casing 1100, which may be a metal such as aluminum or stainless steel.

An opening 1435 may be formed in the terminal 1430. During assembly of the cap assembly 1400, the current collecting protrusion 1331 of the current collector 1300 is introduced through the opening 1435. After the current collecting protrusion 1331 is introduced into the opening 1435, the current collecting protrusion 1331 is caulked, and an outer peripheral surface of an end of the current collecting protrusion 1331 and an inner peripheral surface of the opening 1435 may be welded.

When the base plate 1410, the gasket 1420, and the terminal 1430 are assembled in that order, the openings of the base plate 1410, the gasket 1420, and the terminal 1430 may be aligned. A current collecting protrusion 1331 of the current collector 1300 may be inserted through the aligned openings. The current collecting protrusion 1331 may be caulked, and an outer circumferential surface of an end of the current collecting protrusion 1331 and an inner circumferential surface of the opening 1435 may be welded.

Specifically, after the upper gasket 1420 and the terminal 1430 are sequentially stacked on the base plate 1410, the current collecting protrusion 1331 may pass through a space in which the openings of the base plate 1410, the upper gasket 1420, and the terminal 1430 are aligned. The current collecting protrusion 1331 that passes through the upper surface of the terminal 1430 may be caulked and welded (FIG. 10A). In consideration of a width by which the current collecting protrusion 1331 is caulked around the opening, a diameter of the opening may be set to 70% or less of a length of a short side of the terminal 1430.

In a modified example, after the gasket 1420 and the terminal 1430 are sequentially stacked on the base plate 1410, the annular gasket 1440 may be inserted into a space formed by the connected openings of the base plate 1410, the gasket 1420, and the terminal 1430. An upper portion of the annular gasket 1440 may contact the gasket 1420.

A pin, referred to herein as a rivet 1450, may be inserted into the opening of the annular gasket 1440 and caulked at an upper side of the terminal 1430. A current collecting protrusion 1331 of the current collector 1300 may be inserted into a through-hole, which may be referred to herein as an opening, formed in the rivet 1450 and connected to the terminal 1430. An outer circumferential surface of an end of the current collecting protrusion 1331 may be welded to an inner circumferential surface of the opening 1435 of the terminal 1430.

Configurations identical to those described above may be omitted or briefly described.

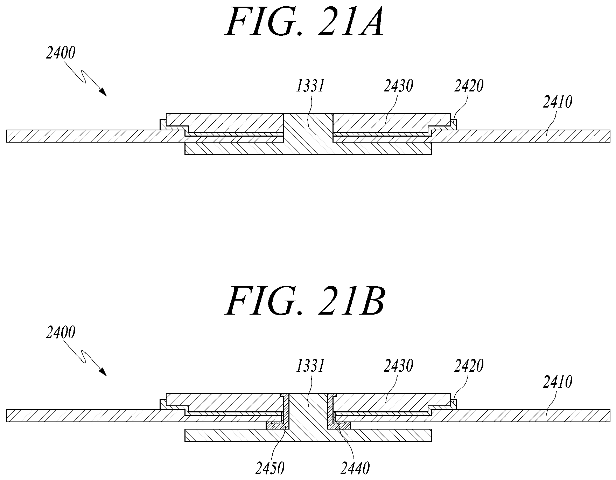

FIG. 20 is a view illustrating a cap assembly according to an example. FIGS. 21A and 21B are cross-sectional views of cap assemblies according to examples.

As illustrated in FIG. 20, a cap assembly 2400 may include a base plate 2410, a gasket, which may be referred to herein to as an upper gasket 2420, and a terminal 2430.

The base plate 2410 includes a seating portion 2411 and a through-hole, which may be referred to herein as an opening 2415. The seating portion 2411 forms a flat surface recessed downward from an upper surface of the base plate 2410. The seating portion 2411 may have a rectangular shape or an elliptical shape. A lower surface of the seating portion 2411 is in contact with a lower surface of the upper gasket 2420. A height d2 of the seating portion 2411 may be 30% to 50% of a maximum thickness t2 of the base plate 2410. Meanwhile, the area of one seating portion 2411 relative to the base plate 2410 may be 8% to 20%, preferably 11% to 14%.

When the seating portion 2411 has a quadrangular shape, the radius of curvature of a corner of the seating portion 2411 may be 2 mm to 3 mm, preferably 2.5 mm. In order to increase a coefficient of friction of a surface of the seating portion 2411, silicone or the like may be applied to the surface of the seating portion 2411, or a surface roughness may be increased by surface treatment.

An opening 2415 is formed at a center of the seating portion 2411. During assembly of the cap assembly 2400, the current collecting protrusion 1331 of the current collector 1300 is introduced through the opening 2415. An area of the opening 2415 may be 5% to 20% of an area of the seating portion 2411. By ensuring that the current collecting protrusion 1331 introduced through the opening 2415 has a sufficiently large diameter, internal resistance may be reduced when electricity generated in the secondary battery is output, thereby reducing heat generation.

The upper gasket 2420 is seated on the seating portion 2411 of the base plate 2410. The upper gasket 2420 may include a lower surface portion 2421, an upper surface portion 2422, and a raised edge, which may be referred to herein to as a rib 2423.

The lower surface portion 2421 is a flat surface and has a contour identical to that of the seating portion 2411 of the base plate 2410. A lower surface of the lower surface portion 2421 may be configured to have the same shape and size as a lower surface of the seating portion 2411 so as to conform to the shape of the lower surface of the seating portion 2411. A difference between a length of a long side of the seating portion 2411 and a length of a long side of the lower surface 2421 may be 0.05 mm or less.

An opening 2425 is formed at a center of the lower surface portion 2421. During assembly of the cap assembly 2400 and the electrode assembly, the current collecting protrusion 1331 of the current collector 1300 is introduced through the opening 2425. An annular gasket, a pin (referred to as a rivet), and a current collecting protrusion may be inserted.

The upper surface portion 2422 is connected to an outer periphery of the lower surface portion 2421. The upper surface portion 2422 is connected by a sidewall extending upward from the outer periphery of the lower surface portion 2421, thereby forming a step with the lower surface portion 2421. The upper surface portion 2422 has a predetermined width and is disposed outside the lower surface portion 2421 along an edge of the lower surface portion 2421. A lower surface of the upper surface portion 2422 is in contact with an upper surface of the base plate 2410.

The upper gasket 2420 may be made of an insulating material. The lower surface portion 2421 is in close contact with a lower surface of the seating portion 2411, and the upper surface portion 2422 is in close contact with an upper surface of the base plate 2410, thereby insulating the terminal 2430 from the base plate 2410.

An area of the upper surface portion 2422 may be 50 to 80% of an area of the lower surface portion 2421. By forming the upper surface portion 2422 to have an area of 50% or more of the area of the lower surface portion 2421, a size of the terminal 2430 may be secured. However, when the area of the upper surface portion 2422 exceeds 80% of the area of the lower surface portion 2421, the area of the lower surface portion 2421 may be relatively reduced, and thus an effect of preventing rotation of components may be reduced. A width of the upper surface portion 2422 may be 2 to 4 mm.

The rib 2423 is formed along an edge of the upper surface portion 2422. The upper gasket 2420 has a container shape defined by the rib 2423 and the upper surface portion 2422, and is configured to seat the terminal 2430. The rib 2423 is formed upward from the upper surface portion 2422. The rib 2423 may be in close contact with a sidewall of the terminal 2430.

A thickness of the rib 2423 may be 0.5 to 1.2 mm. When the thickness of the rib 2423 is thinner than 0.5 mm, a sealing effect may be reduced.

The terminal 2430 is coupled on the upper gasket 2420. The terminal 2430 includes a (central) protruding portion 2431 and a support portion 2432. The (central) protruding portion 2431 constitutes a lower portion of the terminal 2430. The (central) protruding portion 2431 is in contact with the lower surface portion 2421 of the upper gasket 2420. A protruding distance of the (central) protruding portion 2431 may be equal to a depth of the lower surface portion 2421.

The support portion 2432 constitutes an upper portion of the terminal 2430. The support portion 2432 has a larger cross-sectional area than the (central) protruding portion 2431, and an edge of the support portion 2432 is supported by the upper surface portion 2422 and the rib 2423 of the upper gasket 2420. The (central) protruding portion 2431 is in contact with the lower surface portion 2421 of the upper gasket 2420, and the support portion 2432 is in contact with the upper surface portion 2422, thereby insulating and sealing the terminal 2430. Here, a height of the rib 2423 may be 40 to 70% of a height of the support portion 2432 of the terminal. When the height of the rib 2423 is less than 40% of the height of the support portion 2432 of the terminal 2430, it is difficult to stably seal the terminal 2430.

The cap assembly 2400 is assembled by coupling the seating portion 2411 of the base plate 2410 with the lower surface of the lower surface portion 2421 of the upper gasket 2420, and by coupling the upper surface of the lower surface portion 2421 of the upper gasket 2420 with the (central) protruding portion 2431 of the terminal 2430.

An opening 2435 may be formed through the (central) protruding portion 2431 and the support portion 2432. The current collecting protrusion 1331 is introduced through the opening 2435. After the current collecting protrusion 1331 is introduced into the opening 2435, an outer peripheral surface of an end of the current collecting protrusion 1331 and an inner peripheral surface of the opening 2435 may be welded.

More specifically, after the gasket 2420 and the terminal 2430 are sequentially stacked on the base plate 2410, the current collecting protrusion 1331 may pass through a space formed by connected openings of the base plate 2410, the gasket 2420, and the terminal 2430. The current collecting protrusion 1331 passing through to an upper surface of the terminal 1430 may be caulked and welded (FIG. 21A).

In a modified example, after the gasket 2420 and the terminal 2430 are sequentially stacked on the base plate 1410, an annular gasket may be inserted into a space formed by connected openings of the base plate 2410, the gasket 2420, and the terminal 2430. An upper portion of the annular gasket may contact the gasket.

A pin, referred herein to as a rivet, may be inserted into a through-hole, which may be referred to herein as an opening, of the annular gasket and caulked at an upper side of the terminal 2430. The current collecting protrusion 1331 may be inserted into a through-hole, which may be referred to herein as an opening, formed in the rivet and connected to the terminal. An outer circumferential surface of an end of the current collecting protrusion 1331 may be welded to an inner circumferential surface of the opening 2435 of the terminal 2430 (FIG. 21B).

The terminal 2430 is electrically connected to the electrode tabs 1220, 1230, 1240, and 1250 through the current collector 1300.

Configurations identical to those described above may be omitted or briefly described.

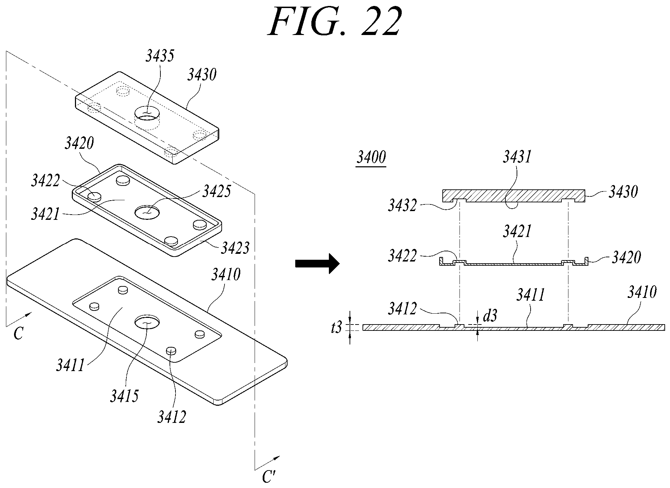

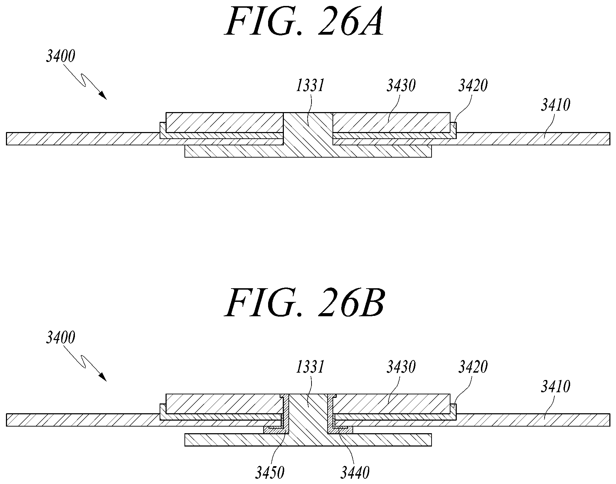

FIGS. 22 to 25 are views illustrating cap assemblies according to other embodiments of the present disclosure. FIGS. 26A and 26B are cross-sectional views illustrating a state in which a cap assembly and a current collecting protrusion are coupled according to an example.

A cap assembly 3400 includes a base plate 3410, a gasket, which may be referred to herein to as an upper gasket 3420, and a terminal 3430.

The base plate 3410 includes a seating portion 3411 and at least one protrusion 3412. The seating portion 3411 forms a flat surface recessed downward from an upper surface of the base plate 3410. The seating portion 3411 may have a quadrilateral shape or a circular shape. A lower surface of the seating portion 3411 is in contact with a lower surface of the upper gasket 3420. A height d3 of the seating portion 3411 may be 30% to 50% of a maximum thickness t3 of the base plate 3410.

When the depth d3 of the seating portion 3411 is greater than 50% of the thickness t3 of the base plate 3410, the strength of the base plate 3410 may be reduced. When the depth d3 of the seating portion 3411 is less than 30% of the thickness t3 of the base plate 3410, the engagement strength with the gasket 3420 may be reduced.

When the seating portion 3411 has a quadrangular shape, the radius of curvature of a corner of the seating portion 3411 may be 2 mm to 3 mm, preferably 2.5 mm. In order to increase a coefficient of friction of an upper surface of the seating portion 3411, silicone or the like may be applied to a surface of the seating portion 3411, or a surface roughness may be increased by surface treatment.

Meanwhile, the area of one seating portion 3411 relative to the base plate 3410 may be 8% to 20%, preferably 14%. One seating portion 3411 is formed on the base plate 3410; however, when two seating portions 3411 are formed on the base plate 3410, a sum of areas of the two seating portions 3411 may be 8% to 20%, preferably 11% to 14%, relative to an area of the base plate 3410.

An opening 3415 is formed at a center of the seating portion 3411. During assembly of the cap assembly 3400, the current collecting protrusion 1331 of the current collector 1300 is introduced through the opening 3415. An area of the opening 3415 may be 5% to 20%, preferably 14%, of an area of the seating portion 3411. By ensuring that the current collecting protrusion 1331 introduced through the opening 3415 has a sufficiently large diameter, internal resistance may be reduced when electricity generated in the secondary battery is output, thereby reducing heat generation.

One or more protrusions 3412 may be disposed on the seating portion 3411. The protrusions 3412 protrude from an upper surface of the seating portion 3411 by a predetermined height. The protrusions 3412 may have a circular shape, a polygonal shape, or a linear shape.

The shape of the seating portion 3411 and the shape and number of the protrusions 3412 may be selected as needed. For example, as illustrated in FIG. 22, the seating portion 3411 may have a rectangular shape. In addition, four cylindrical protrusions 3412 may be disposed near four corners of the seating portion 3411. When positions of the plurality of protrusions 3412 are set to be symmetric with respect to the opening 3415, there is an advantage in that, during assembly of the components, it is not necessary to align directions of components, thereby facilitating assembly.

When a plurality of protrusions 3412 are formed on the seating portion 3411, a sum of areas of the plurality of protrusions may be 2% to 10% of an area of the seating portion 3411. The upper gasket 3420 and the terminal 3430 are sequentially stacked on the seating portion 3411 of the base plate 3410. When a total area of the protrusions 3412 exceeds 10%, an area of a lower surface of the terminal 3430 may be reduced, thereby increasing internal resistance. When the total area of the protrusions 3412 is less than 5%, an effect of preventing rotation of components may be reduced, which is undesirable.

The area of the protrusion 3412 refers to a cross-sectional area of the protrusion 3412 in a horizontal direction, that is, in a direction parallel to an upper surface of the base plate 3410.

A total area (S, mm²) of the protrusions 3412 may be determined by following Equation 2:
[Equation 2] $S = 1 / 8 ⋅ AB / C ⋅ N 2$
where A is a length of the base plate (mm), B is an area of the opening relative to an area of the seating portion, C is a thickness of the base plate (mm), and N is the number of protrusions.

When the length of the base plate 3410 is large or the thickness of the base plate 3410 is small, the area of the protrusions 3412 may be increased or the number of protrusions 3412 may be increased so as to increase a boundary area contacting the gasket 3420 in a vertical direction. When the area of the opening 3415 relative to the area of the seating portion 3411 is large, it may be difficult to secure a sufficient area of the seating portion 3411 in contact with the gasket 3420, and thus the area of the protrusions 3412 may be increased or the number of protrusions 3412 may be increased to prevent rotation of the gasket 3420.

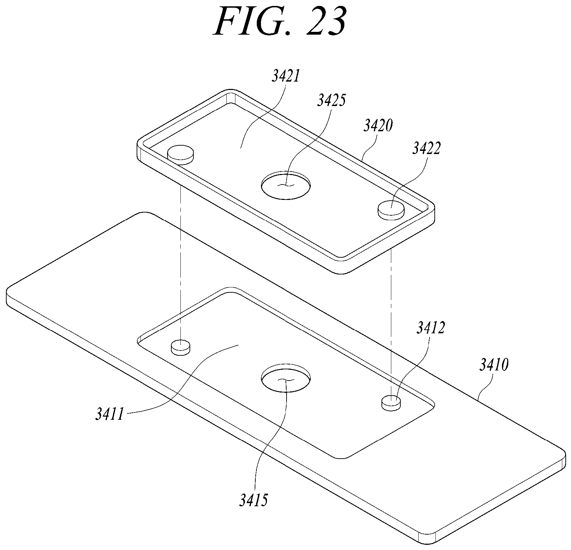

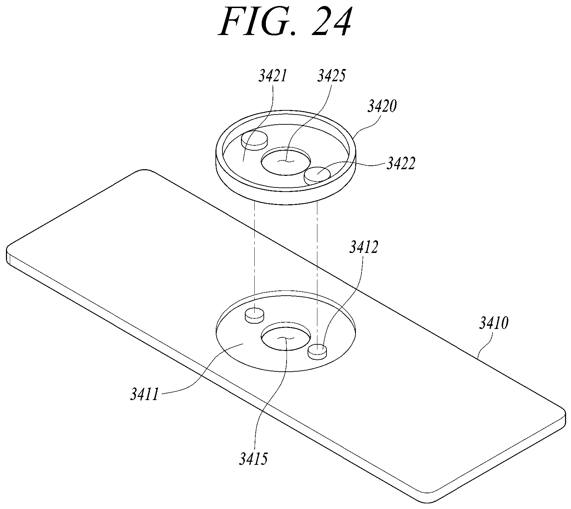

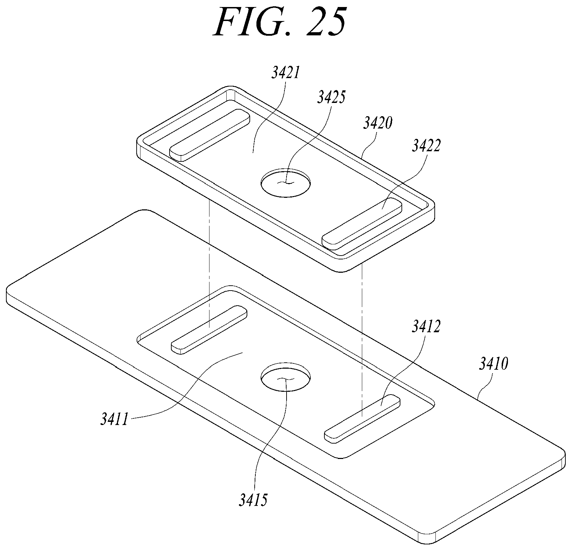

In a further example, a seating portion 3411 may have a rectangular shape, and two protrusions 3412 may be disposed to be diagonally spaced apart from each other on the seating portion 3411 (FIG. 23). Alternatively, a seating portion 3411 may have a circular shape, and two protrusions 3412 may be disposed to be spaced apart from each other on the seating portion 3411 (FIG. 24). Alternatively, a seating portion 3411 may have a rectangular shape, and two linear protrusions 3412 may be disposed to be spaced apart from each other on the seating portion 3411 (FIG. 25). The protrusions may be one of a cylindrical shape, an elliptic cylindrical shape, and a quadrangular prismatic shape.

The upper gasket 3420 is seated on the seating portion 3411 of the base plate 3410. The upper gasket 3420 may include a bottom portion 3421, at least one fixing portion 3422, and a raised edge, which may be referred to herein to as a rib 3423. The bottom portion 3421 is a flat surface and has a contour identical to that of the seating portion 3411 of the base plate 3410. A lower surface of the bottom portion 3421 may be configured to have the same shape and size as a lower surface of the seating portion 3411 so as to correspond to the shape of the lower surface of the seating portion 3411.

An opening 3425 is formed at a center of the bottom portion 3421. During assembly of the cap assembly 3400 and the electrode assembly, the current collecting protrusion 1331 of the current collector 1300 is introduced through the opening 3425.

At least one fixing portion 3422 is provided on the bottom portion 3421. The fixing portion 3422 is coupled to the protrusion 3412 of the base plate 3410. In order to be coupled to the protrusion 3412 protruding from the seating portion 3411, the fixing portion 3422 has a concave space formed on an inner side thereof and has a convex shape toward an upper side. The fixing portion 3422 may have the same shape as the protrusion 3412.

The rib 3423 is formed along an edge of an upper surface of the bottom portion 3421. The rib 3423 is in close contact with a sidewall of the seating portion 3411 to seal the base plate 3410. The upper gasket 3420 has a container shape defined by the rib 3423 and the bottom portion 3421, and is configured to seat the terminal 3430. The rib 3423 is formed upward from the bottom portion 3421 and has a height greater than a depth of the seating portion 3411.

In addition, a height of the rib 3423 may be 30% to 80%, preferably 50% of a terminal height. When the height of the rib 3423 is less than 30% of the terminal height, it is difficult to stably seal the terminal 3430. A thickness of the rib 3423 may be 0.5 to 1.2 mm. When the thickness of the rib 3423 is thinner than 0.5 mm, a sealing effect may be reduced.

The upper gasket 3420 may be made of an insulating material. The terminal 3430 and the base plate 3410 are insulated from each other by the upper gasket 3420.

The terminal 3430 is coupled on the upper gasket 3420. At least one recess, which may be referred to as a groove 3432 is formed on a lower surface 3431 of the terminal 3430. The groove 3432 is coupled to the fixing portion 3422 of the upper gasket 3420. An inner side of the groove 3432 is in contact with an upper surface of the fixing portion 3422. The cap assembly 3400 is assembled by coupling the protrusion 3412 of the base plate 3410 with a lower surface of the fixing portion 3422 of the upper gasket 3420, and by coupling an upper surface of the fixing portion 3422 of the upper gasket 3420 with the groove 3432 of the terminal 3430. The protrusions 3412, the fixing portions 3422, and the grooves 3432 may be provided in the same number and may be disposed at corresponding positions.

An opening 3435 may be formed in the terminal 3430. During assembly of the cap assembly 3400, the current collecting protrusion 1331 of the current collector 1300 is introduced through the opening 3435. After the current collecting protrusion 1331 is introduced into the opening 3435, an outer peripheral surface of an end of the current collecting protrusion 1331 and an inner peripheral surface of the opening 3435 may be welded.

More specifically, after the gasket 1420 and the terminal 1430 are sequentially stacked on the base plate 1410, the current collecting protrusion 1331 may pass through a space formed by connected openings of the base plate 1410, the gasket 1420, and the terminal 1430. The current collecting protrusion 1331 passing through to an upper surface of the terminal 1430 may be caulked and welded (FIG. 26A).

In a modified example, after the gasket 3420 and the terminal 3430 are sequentially stacked on the base plate 3410, an annular gasket may be inserted into a space formed by connected openings of the base plate 3410, the gasket 3420, and the terminal 3430. An upper portion of the annular gasket may contact the gasket 3420.

A rivet may be inserted into a through-hole, which may be referred to herein as an opening, of the annular gasket and caulked at an upper side of the terminal 3430. The current collecting protrusion 1331 may be inserted into a through-hole, which may be referred to herein as an opening, formed in the rivet and connected to the terminal. An outer circumferential surface of an end of the current collecting protrusion 1331 may be welded to an inner circumferential surface of the opening 3435 of the terminal 3430 (FIG. 26B).

The terminal 3430 is electrically connected to the electrode tabs 1220, 1230, 1240, and 1250 through the current collector 1300.

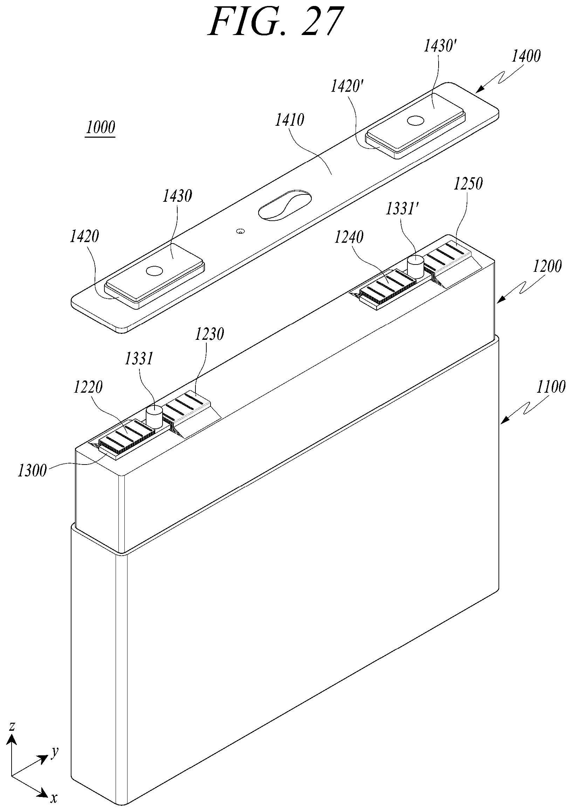

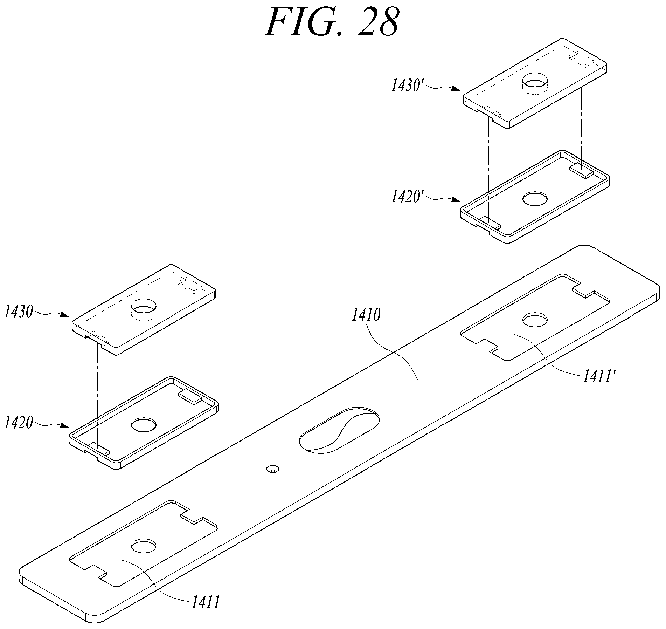

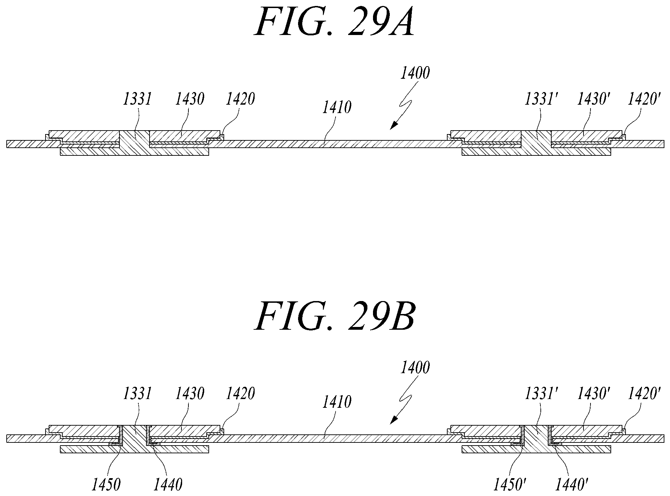

FIG. 27 is a view illustrating a secondary battery according to a modified example of the first embodiment of the present disclosure, FIG. 28 is a view illustrating a cap assembly of the secondary battery according to the modified example of the first embodiment of the present disclosure, and FIGS. 29A and 29B are views illustrating a state in which a cap assembly and a current collector are coupled in the secondary battery according to the modified example of the first embodiment of the present disclosure.

As shown in FIGS. 27 and 28, in the secondary battery according to one embodiment of the present disclosure, a cap assembly 1400 provided with two electrode terminals may be arranged at one end of the casing 1100. An opening is formed at one end of the casing 1100, and one cap assembly 1400 may be coupled to the casing 1100 to seal the opening.

The cap assembly 1400 may be formed by respectively coupling gaskets 1420 and 1420' and terminals 1430 and 1430' on two seating portions 1411 and 1411' formed on the base plate 1410. When the gasket 1420 and the terminal 1430 are sequentially coupled on the seating portion 1411 of the base plate 1410, and the gasket 1420' and the terminal 1430' are sequentially coupled on the seating portion 1411', the openings of the base plate 1410, the gasket 1420, and the terminal 1430 may be aligned, and the openings of the base plate 1410, the gasket 1420', and the terminal 1430' may be aligned. The current collecting protrusion 1331 may pass through a space formed by the connected openings of the base plate 1410, the gasket 1420, and the terminal 1430.

The current collecting protrusion 1331 passing through the opening may be caulked and welded on an upper surface of the terminal 1430 (FIG. 29A). In consideration of a width by which the current collecting protrusion 1331 is caulked around the opening, a diameter of the opening may be 70% or less of a length of a short side of the terminal 1430.

In a modified example, after the gasket 1420 and the terminal 1430 are sequentially stacked on the base plate 1410, the annular gasket 1440 may be inserted into a space formed by connected openings of the base plate 1410, the gasket 1420, and the terminal 1430. An upper portion of the annular gasket 1440 may contact the gasket 1420.

A pin, which may be referred to herein as a rivet 1450, may be inserted into the opening of the annular gasket 1440 and caulked at an upper side of the terminal 1430. The current collecting protrusion 1331 may be inserted into a through-hole, which may be referred to herein as an opening, formed in the rivet 1450 and connected to the terminal. An outer circumferential surface of an end of the current collecting protrusion 1331 may be welded to an inner circumferential surface of the opening 1435 of the terminal 1430 (FIG. 29B).

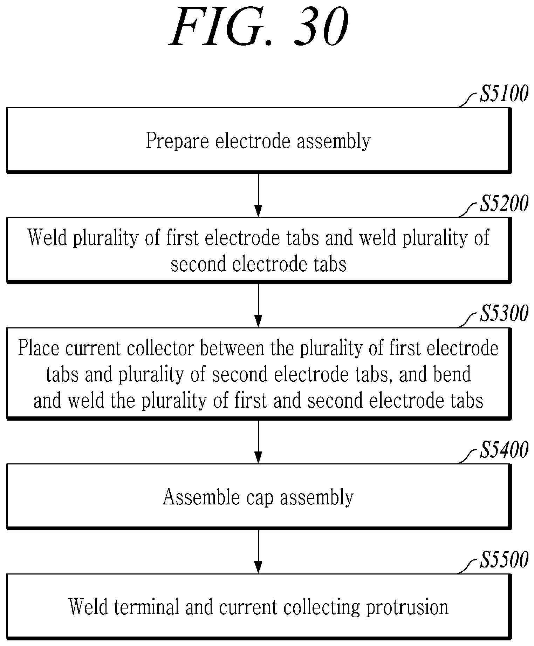

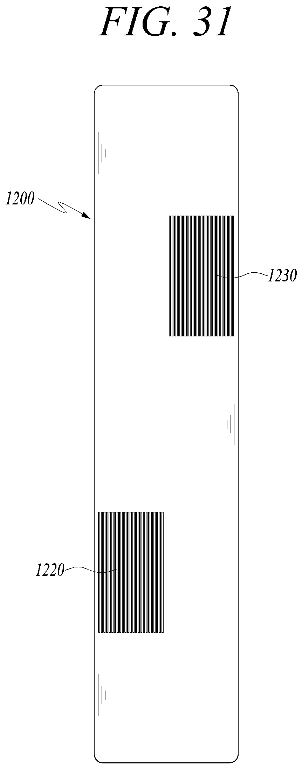

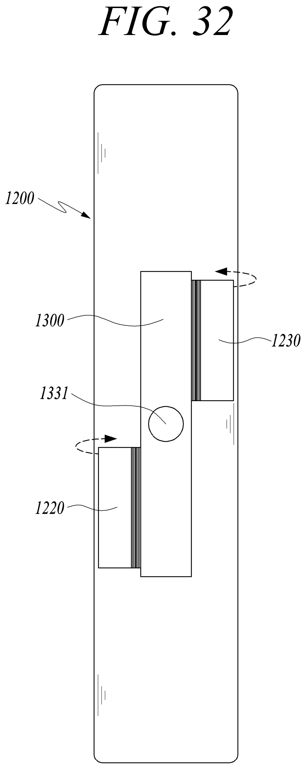

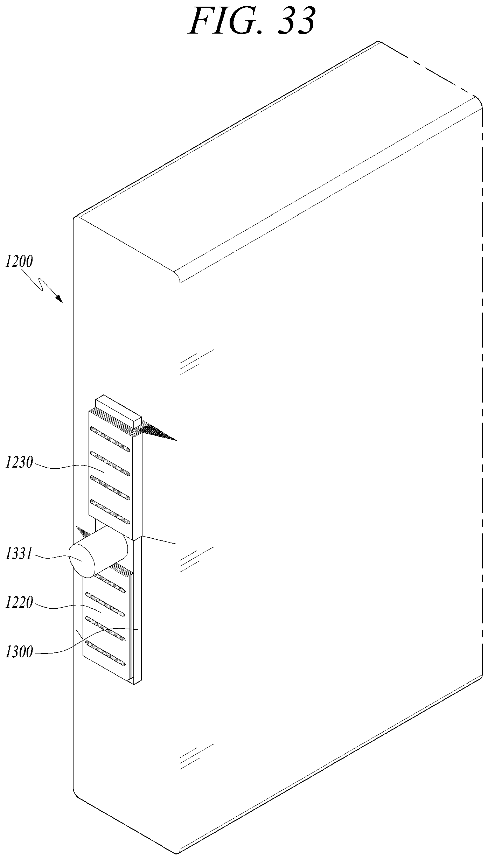

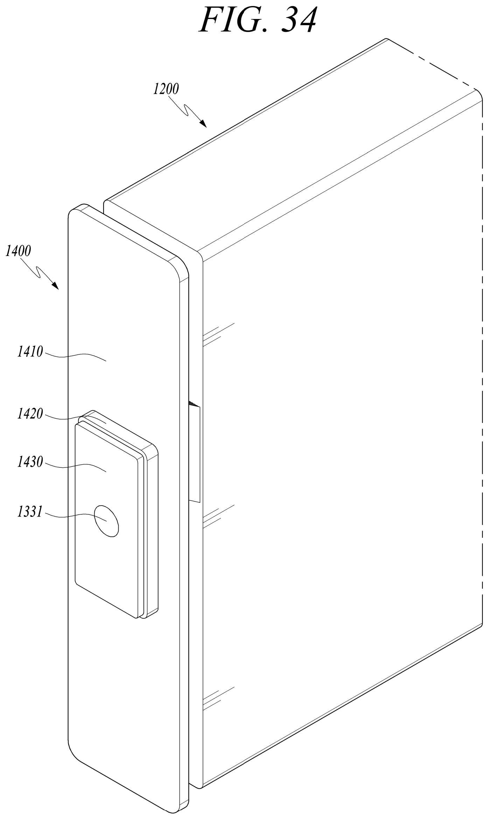

FIG. 30 is a flowchart illustrating a method of manufacturing a secondary battery according to an example. FIG. 31 is a view illustrating a state in which a plurality of first electrode tabs and a plurality of second electrode tabs are respectively grouped in a secondary battery according to an example, FIG. 32 is a view illustrating a state in which a current collector is disposed between a plurality of first electrode tabs and a plurality of second electrode tabs in a secondary battery according to an example, FIG. 33 is a view illustrating a state in which a current collector and first and second electrode tabs are welded in a secondary battery according to an example, and FIG. 34 is a view illustrating a state in which a cap assembly is coupled to an electrode assembly in a secondary battery according to an example.

As illustrated in FIG. 30, in order to manufacture a secondary battery according to an example, an electrode assembly is prepared (S5100). The electrode assembly 1200 includes an electrode portion 1210, a plurality of first electrode tabs 1220 and a plurality of second electrode tabs 1230 which are formed at one end of the electrode portion.

The plurality of first electrode tabs 1220 and the plurality of second electrode tabs 1230 are disposed at one end of the electrode portion 1210. When a plurality of electrode members forming the electrode portion are stacked, the plurality of first electrode tabs 1220 overlap each other at a first position, and the plurality of second electrode tabs 1230 overlap each other at a second position. That is, the plurality of first electrode tabs 1220 are grouped at the first position, and the plurality of second electrode tabs 1230 are grouped at the second position. The first position and the second position are spaced apart from each other on the electrode members, and the grouped plurality of first electrode tabs 1220 and the grouped plurality of second electrode tabs 1230 may be spaced apart from each other in a width direction and a length direction of the electrode assembly 1200. As illustrated in FIG. 23, the grouped plurality of first electrode tabs 1220 may be disposed at one end in the width direction of the electrode assembly, and the grouped plurality of second electrode tabs 1230 may be disposed at the other end in the width direction of the electrode assembly 1200.

Next, the plurality of first electrode tabs 1220 are welded to each other, and the plurality of second electrode tabs 1230 are welded to each other (S5200). The plurality of first electrode tabs 1220 and the plurality of second electrode tabs 1230 are aligned to be spaced apart from each other in a length direction of the electrode assembly 1200. The grouped and aligned plurality of electrode tabs are primarily welded such that the first electrode tabs 1220 are welded to each other and the second electrode tabs 1230 are welded to each other.

After the current collector 1300 is disposed between the primarily welded plurality of first electrode tabs 1220 and plurality of second electrode tabs 1230, the plurality of first and second electrode tabs 1220 and 1230 are welded thereto (S5300). In order to connect the plurality of electrode tabs 1220 and 1230 to the current collector 1300, in this embodiment, electrode tabs 1220 and 1230 having the same polarity are divided into two groups and welded to the current collector 1300.

At one end of the electrode portion 1210, a space is formed between the primarily welded plurality of first electrode tabs 1220 and plurality of second electrode tabs 1230. In order to facilitate disposition of the current collector 1300, the welded plurality of first electrode tabs 1220 and the welded plurality of second electrode tabs 1230 may be bent toward the outer side of the electrode assembly 1200, respectively. The current collector 1300 is placed between the first electrode tabs 1220 and the second electrode tabs 1230, and the first electrode tabs 1220 and the second electrode tabs 1230 are bent toward an upper surface of the current collector 1300, respectively. The plurality of first electrode tabs 1220 are bent onto an upper surface of the first current collecting portion 1310 of the current collector 1300, and the plurality of second electrode tabs 1230 are bent onto an upper surface of the second current collecting portion 1320 of the current collector 1300. The plurality of first electrode tabs 1220 and the plurality of second electrode tabs 1230 are bent in opposite directions.

The current collector 1300 and the first and second electrode tabs 1220 and 1230 placed on the current collector 1300 are welded (FIG. 25). The plurality of first electrode tabs 1220 are welded to the first current collecting portion 1310, and the plurality of second electrode tabs 1230 are welded to the second current collecting portion 1320. Welding may be performed on upper portions of the plurality of first electrode tabs 1220 and the plurality of second electrode tabs 1230. The welding may be performed using a method such as ultrasonic welding or laser welding.

During welding, welding may proceed toward the first current collecting portion 1310 from the plurality of first electrode tabs 1220 at the first current collecting portion 1310 of the current collector 1300, and welding may proceed toward the second current collecting portion 1320 from the plurality of second electrode tabs 1230 at the second current collecting portion 1320 of the current collector 1300.

In this embodiment, the plurality of electrode tabs are primarily welded such that the first electrode tabs 1220 are welded to each other and the second electrode tabs 1230 are welded to each other, and are then welded to the current collector 1300. However, in another embodiment, the plurality of electrode tabs 1220 and 1230 may be directly bent onto the current collector 1300 and welded thereto without performing the primary welding.

The electrode assembly 1200 to which the current collector 1300 is welded is accommodated in the casing 1100, and the cap assembly 1400 seals the opening of the casing 1100 to be assembled (S5400).

After the current collecting protrusion 1321 is inserted into a through hole of the terminal 1420 of the cap assembly 1400, the outer peripheral surface of the end of the current collecting protrusion 1321 and the inner peripheral surface of an end of the through hole are welded (S5500).

When the current collector is welded on the upper portion of the electrode tabs, the thickness of the current collector needs to be reduced to transfer heat to electrode tabs located on a lower side, which leads to deterioration of durability. However, according to the present disclosure, the plurality of electrode tabs are bent and welded onto the current collector such that the thickness of the current collector may be secured and the electrode tabs may be more efficiently welded to the current collector.

In addition, according to the present disclosure, a plurality of electrode tabs having the same polarity are divided into two groups and welded, so that the electrode tabs may be stably welded without unwelded portions.

According to the present disclosure, since the electrode tabs are positioned on the current collector 1300 and welding is performed on the upper portion of the electrode tabs, the thickness of the current collector may be increased and there is no concern of damaging the separator provided in the electrode portion. Thus, durability of the secondary battery may also be improved.

Meanwhile, a battery module may be configured by including a plurality of secondary batteries according to this embodiment. The plurality of secondary batteries may be connected to each other by a busbar or the like to form the battery module. In addition, a battery pack may be configured by including a plurality of battery modules. The battery pack may be configured by disposing the plurality of battery modules in an upper pack housing and a lower pack housing that constitute a pack housing. Further, the battery pack may be provided to a transportation means that moves luggage or people or performs work while moving. Such a transportation means may include a bicycle, heavy equipment, agricultural and fishery equipment, an automobile, a bus, and an aircraft. Here, the automobile may be an electric vehicle, a hybrid vehicle, or a plug-in hybrid vehicle. The automobile may include a four-wheeled vehicle or a two-wheeled vehicle. The transportation means may be operated by power supplied from the battery pack.

According to an example, a secondary battery, and a module, a pack, and a transportation means including the same can prevent an electrode assembly from being affected when welding an electrode tab to a current collector.

Further, according to an example, a secondary battery, and a module, a pack, and a transportation means including the same can stably weld a large number of electrode tabs to a current collector when welding the electrode tabs to the current collector.

Furthermore, according to an example, a secondary battery, and a module, a pack, and a transportation means including the same can prevent rotation of components while simplifying an assembly process of a cap assembly.

While the present disclosure has been described with respect to the specific embodiments, it will be apparent to those skilled in the art that various changes or modifications of the present disclosure are possible by adding, changing, or deleting components without departing from the spirit of the present disclosure as defined in the following claims.

### DESCRIPTION OF REFERENCE NUMERALS

| | | | |
|---|---|---|---|
| 1000: | secondary battery | 1100: | casing |
| 1200: | electrode assembly | 1210: | electrode portion |
| 1220, 1230: | electrode tabs | 1300: | current collector |
| 1310: | first current collecting portion | 1320: | second current collecting portion |
| 1330: | connection portion | 1331: | current collecting protrusion |
| 1400: | cap assembly | | |
| 1410, 2410, 3410: | base plate | | |
| 1411: | seating portion | 1412: | locking portion |
| 1415, 1425, 1435: | opening | | |
| 1420, 2420, 3420: | gasket | | |
| 1421: | bottom portion | 1422: | fixing portion |
| 1423, 2423, 3423: | rib | 2421: | lower surface |
| 2422: | upper surface | 1430, 2430, 3430: | terminal |
| 2431: | protrusion | 2432: | support portion |
| 3411: | seating portion | 3412: | protrusion |

## Claims

1. A secondary battery, comprising:
an electrode assembly comprising electrode tabs protruding outward;
a current collector to which at least one of the electrode tabs is connected;
a battery casing accommodating the electrode assembly; and
a cap assembly coupled to the battery casing such that the current collector is arranged between the electrode assembly and the cap assembly,
wherein the cap assembly comprises:
a base plate having a first surface facing away from the electrode assembly and a second surface opposite the first surface, wherein the base plate comprises, on the first surface thereof, a structure element that is defined by a change in thickness of the base plate;
a gasket arranged on the first surface of the base plate and engages the structure element on the first surface of the base plate; and
a terminal arranged on the gasket.

2. The secondary battery of claim 1,
wherein the base plate and the gasket each comprise a respective through-hole, and the through-holes of the base plate and the gasket are aligned to provide a continuous passage.

3. The secondary battery of claim 1,
wherein the base plate, the gasket and the terminal each comprise a respective through-hole, and the through-holes of the base plate, the gasket and the terminal are aligned to provide a continuous passage.

4. The secondary battery of claim 3,
wherein the current collector has a current collecting protrusion extending through the continuous passage formed by the through-holes of the base plate, the gasket and the terminal.

5. The secondary battery of any one of the preceding claims,
wherein a first electrode tab and a second electrode tab of the electrode tabs of the electrode assembly are attached to the current collector so that the first electrode tab and the second electrode tab are spaced apart from each other on the current collector.

6. The secondary battery of any one of the preceding claims,
wherein the battery casing is a prismatic casing comprising a sidewall defining a rectangular tube extending between two ends, whereby at least one of the two ends of the battery casing is open and is closed by the cap assembly; or
wherein the battery casing comprises a cylindrical sidewall extending between two ends, whereby at least one of the two ends of the batter casing is open and is closed by the cap assembly.

7. The secondary battery of any one of the preceding claims,
wherein the gasket comprises a first surface facing away from the electrode assembly and a second surface opposite the first surface,
wherein the gasket is arranged so that the second surface of the gasket rests against the first surface of the base plate,
wherein the second surface of the gasket is shaped and/or dimensioned so as to engage the structure element on the first surface of the base plate.

8. The secondary battery of any one of the preceding claims,
wherein the gasket comprises a first surface facing away from the electrode assembly and a second surface opposite the first surface,
wherein the gasket comprises, on the first surface thereof, a structure element that is defined by a change in thickness of the gasket.

9. The secondary battery of claim 8,
wherein the terminal comprises a first surface facing away from the electrode assembly and a second surface opposite the first surface,
wherein the terminal is arranged so that the second surface of the terminal rests against the first surface of the gasket,
wherein the second surface of the terminal is shaped and/or dimensioned so as to engage the structure element on the first surface of the gasket.

10. The secondary battery of any one of the preceding claims,
wherein the base plate comprises, in the first surface thereof, a seating portion in and/or on which the gasket is arranged.

11. The secondary battery according to claim 10,
wherein the seating portion has a polygonal shape, elliptical shape or a circular shape when viewed in a direction perpendicular to the first surface of the base plate.

12. The secondary battery according to claim 10 or 11,
wherein the seating portion is recessed relative to a surrounding region of the first surface, the seating portion having a depth corresponding to 20% to 50% of a thickness of the base plate; and/or
wherein an area of the seating portion of the base plate, when viewed in a direction perpendicular to the first surface of the base plate, corresponds to 8% to 20% of an area of the seating portion in a plane parallel to the upper end of the battery casing.

13. The secondary battery according to any one of claims 10 to 12,
wherein the base plate comprises a through-hole having an area corresponding to 5% to 20% of an area of the seating portion when viewed in a direction perpendicular to the first surface of the base plate.

14. The secondary battery according to any one of claims 10 to 13,
wherein the seating portion is recessed relative to a surrounding region of the first surface of the base plate,
wherein the structure element of the base plate comprises a locking portion extending from the surrounding region of the first surface of the base plate into the seating portion, the locking portion having a thickness greater than a thickness of the seating portion.

15. The secondary battery according to any one of claims 10 to 14,
wherein the structure element of the base plate further comprises an additional locking portion extending from the surrounding region of the first surface of the base plate into the seating portion, the additional locking portion having a thickness greater than a thickness of the seating portion,
wherein the locking portion and the additional locking portion are arranged so as to be spaced from each other, for example arranged opposite each other.

16. The secondary battery according to claims 14 or 15,
wherein, when viewed in a direction perpendicular to the first surface of the base plate, the locking portion has a shape that is polygonal, semicircular or circular.

17. The secondary battery according to any one of the claims 14 to 16,
wherein the locking portion occupies 0.05% to 10% of an area of the seating portion when viewed in a direction perpendicular to the first surface of the base plate.

18. The secondary battery according to any one of claims 14 to 17,
wherein the structure element of the base plate satisfies Equation 1 as follows: [Equation 1] $S = 1 / 2 ⋅ AB / C ⋅ {N}^{2}$
where A is a longer dimension of the base plate in mm, B is a ratio of a width of the seating portion to a width of a through-hole formed in the base plate, C is a thickness of the base plate in mm, N is a number of locking portions, and S is 0.01 to 0.1.

19. The secondary battery according to any one of the claims 14 to 18,
wherein an extent of the locking portion, along a shortest dimension of the seating portion in a plane parallel to the first surface of the base plate, corresponds to 10% to 80% of an extent of the seating portion; and/or
wherein an extent of the locking portion, along a longest dimension of the seating portion in a plane parallel to the upper end of the battery casing, corresponds to 3% to 10% of an extent of the seating portion; and/or
wherein an extent of the locking portion, along a thickness direction of the cap assembly, corresponds to 10% to 70% of a height of the terminal in a direction perpendicular to the first surface of the base plate.

20. The secondary battery according to any one of claims 14 to 19,
wherein the gasket comprises, in the second surface thereof, a fixing portion positioned, shaped and dimensioned so as to receive the locking portion of the base plate when the second surface of the gasket rests against the first surface of the base plate, thereby engaging the structure element of the base plate.

21. The secondary battery according to claim 20,
wherein the structure element of the gasket is formed as an upward projection in the first surface of the gasket at a position corresponding to the fixing portion.

22. The secondary battery according to any one of claims 14 to 21,
wherein the structure element of the base plate comprises a plurality of locking portions each extending from the surrounding region of the first surface of the base plate into the seating portion and each having a thickness greater than the thickness of the seating portion,
wherein the plurality of locking portions are arranged equidistantly from one another along a periphery of the seating portion.

23. The secondary battery according to any one of the preceding claims,
wherein the gasket has a raised edge along a periphery of the gasket.

24. The secondary battery according to claim 23,
wherein the raised edge extends from the first surface of the gasket by a height that corresponds to 30% to 80% of a height of the terminal in a direction perpendicular to the first surface of the base plate; and/or
wherein the raised edge has a wall thickness 0.5 mm to 1.2 mm.

25. The secondary battery according to any one of claims 10 to 24,
wherein the gasket comprises a lower surface portion resting against the seating portion and a lateral extension portion extending outward from the lower surface portion over a peripheral edge of the seating portion, thereby engaging the peripheral edge of the seating portion as structure element of the base plate.

26. The secondary battery of claim 25,
wherein the second surface of the terminal is shaped and dimensioned so as to rest against and conform to the lower surface portion and the lateral extension portion.

27. The secondary battery of claim 25 or 26,
wherein an upper surface of the lower surface portion lies in a first plane and an upper surface of the lateral extension portion lies in a second plane that is offset from the first plane in a direction perpendicular to the first surface of the gasket.

28. The secondary battery according to any one of claims 25 to 27,
wherein an area of the lateral extension portion corresponds to 50% to 80% of an area of the lower surface portion when viewed in a direction perpendicular to the first surface of the gasket.

29. The secondary battery according to any one of claims 25 to 28,
wherein the lateral extension portion extends outward from the lower surface region by 2 mm to 4 mm.

30. The secondary battery according to any one of claims 25 to 29,
wherein the lower surface portion is shaped and dimensioned so as to fit to the seating portion.

31. The secondary battery according to any one of claims 25 to 30,
wherein the terminal has an outer periphery having a uniform thickness and a central protruding portion that extends downward to rest against the lower surface portion of the gasket, wherein an extent of the central protruding portion in a downward direction is equal to a distance between the first plane and the second plane.

32. The secondary battery according to any one of the preceding claims,
wherein the structure element of the base plate comprises a protrusion protruding from the first surface of the base plate,
wherein the gasket comprises, in a second surface thereof, a fixing portion to engage the protrusion, for example by receiving the protrusion in a recess formed in the fixing portion.

33. The secondary battery according to claim 32,
wherein the base plate comprises, in the first surface thereof, a seating portion in and/or on which the gasket is arranged,
wherein the protrusion is formed within the seating portion.

34. The secondary battery according to any one of the preceding claims,
wherein the seating portion has a polygonal or circular shape when viewed in a direction perpendicular to the first surface of the base plate,
wherein the structure element of the base plate further comprises a plurality of protrusions including said protrusion that are disposed symmetrically and equidistantly with respect to a geometric center of the polygonal or circular shape of the base plate.

35. The secondary battery according to any one of claims 32 to 34,
wherein the protrusion has a pillar shape with a base that has one of: a cylindrical shape, an elliptical cylindrical shape, and a polygonal shape.

36. The secondary battery according to any one of claims 32 to 35,
wherein the seating portion has a polygonal shape when viewed in a direction perpendicular to the upper end of the battery casing,
wherein the base plate comprises protrusions, comprising the protrusion as mentioned, according to the number of corners of the polygonal shape, wherein the protrusions are disposed symmetrically and equidistantly with respect to a geometric center of the polygonal or circular shape of the base plate.

37. The secondary battery according to any one of claims 32 to 36,
wherein the protrusion occupy 1% to 10% of an area of the seating portion when viewed in a direction perpendicular to the upper end of the battery casing.

38. The secondary battery according to any one of claims 32 to 37,
wherein the base plate is provided so as to satisfy Equation 2 as follows: [Equation 2] $S = 1 / 8 ⋅ AB / C ⋅ {N}^{2}$
where A is a size of the base plate along its longest extension in mm, B is a ratio of width of the seating portion to a width of the through-hole formed through the base plate, C is a thickness of the base plate in mm, N is a number of protrusions, and S is 0.02 to 0.1.

39. The secondary battery according to any one of claims 32 to 38,
wherein the gasket comprises a same number of fixing portions as the number of the protrusions, each of the fixing portions of the gasket being configured to receive a respective one of the protrusions of the base plate.

40. The secondary battery according to claim 39,
wherein the structure element of the gasket is formed by projections in the first surface of the gasket corresponding to the fixing portions of the gasket,
wherein the terminal comprises recesses corresponding to the projections to receive the projections.

41. The secondary battery according to claim 40,
wherein the current collecting protrusion of the current collector is welded to the terminal at the first surface of the terminal.

42. The secondary battery of any one of the preceding claims, further comprising:
an annular gasket inserted into a through-hole of the base plate and in contact with the gasket; and
a pin extending through the through-hole of the base plate and the annular gasket, wherein the pin is, for example, a rivet to be deformed at one end thereof.

43. The secondary battery of claim 42,
wherein the pin is a hollow pin configured so that a current collecting protrusion of the current collector extends through the pin.
